# EUROPÄISCHE PATENTSCHRIFT

(11) **EP 1 170 194 B1**
(45) Veröffentlichungstag und Bekanntmachung des Hinweises auf die Patenterteilung: **09.11.2005**
(21) Anmeldenummer: 01114438.3
(22) Anmeldetag: 15.06.2001
(51) Int. Cl.: B62D 1/18

(54) **Vorrichtung zur Längen- und Höhenverstellung einer Kraftfahrzeuglenksäule**
Device for adjusting the reach and height of the steering column of a vehicle
Dispositif de réglage en longueur et en hauteur de la colonne de direction d'un véhicule

(30) Priorität: 29.06.2000 DE 10031721
(43) Veröffentlichungstag der Anmeldung: 09.01.2002
(60) Teilanmeldung: 03024632.6
(73) Patentinhaber: ThyssenKrupp Presta AG, 9492 Eschen (LI)
(72) Erfinder: Lutz, Christian, 6714 Nüziders (AT)
(74) Vertreter: Hefel, Herbert

(56) Entgegenhaltungen:
- EP-A- 0 802 104
- DE-A- 19 643 203
- DE-A- 19 933 677

## Beschreibung

Die Erfindung betrifft eine Vorrichtung an einer Lenksäule für Kraftfahrzeuge zur Längen- und Höhenverstellung der Lenksäule mit einem am Chassis des Fahrzeugs festlegbaren Konsolenteil, einem Führungsteil, in dem ein Spannbolzen in axialer Richtung des Spannbolzens verschiebbar gelagert ist, der durch eine Öffnung im Konsolenteil ragt und der für die Höhenverstellung der Lenksäule zusammen mit dem Führungsteil senkrecht zu seiner axialen Ausdehnung und im wesentlichen senkrecht zur axialen Ausdehnung der Lenkspindel gegenüber dem Konsolenteil verschiebbar ist, und einem Mantelrohr, das ein in axialer Richtung der Lenksäule sich erstreckendes Langloch aufweist, durch das der Spannbolzen ragt, und die für die Längenverstellung der Lenksäule in axialer Richtung der Lenkspindel verschiebbar ist, wobei eine den Spannbolzen und ein Spannglied umfassende Spanneinrichtung vorgesehen ist, über die eine erste Feststelleinrichtung für die Höhenverstellung der Lenksäule und eine separate zweite Feststelleinrichtung für die Längenverstellung der Lenksäule gemeinsam öffen- und schließbar sind.

Eine derartige Vorrichtung zur Längen- und Höhen- bzw. Neigungsverstellung einer Lenksäule ist aus der DE 196 43 203 A1 bekannt. Die Feststelleinrichtungen werden hier jeweils durch erste und zweite Verzahnungen gebildet, die mittels einer gemeinsamen Spanneinrichtung miteinander in Eingriff bringbar sind. Es verlaufen somit über den Spannbolzen der Spanneinrichtung zwei getrennte Kraftschlußkreise, und zwar jener für die Höhen- bzw. Neigungsverstellung und jener für die Längenverstellung. Die Aufteilung auf diese beiden getrennten Kraftschlußkreise folgt hier zu dem Zweck, in dem einen der Kraftschlußkreise (für die Längenverstellung) eine Sollbruchstelle vorzusehen, so daß im Crash-Fall nur der mit der Sollbruchstelle versehene Kraftschlußkreis geöffnet wird, der andere jedoch geschlossen bleibt. Dadurch verschiebt sich im Crash-Fall die Lenksäule nur in axialer Richtung, während die eingestellte Höhen- bzw. Neigungslage beibehalten wird.

Durch diese bekannte Vorrichtung kann eine sichere Feststellung der Lenksäule im geschlossenen Zustand der Spanneinrichtung erzielt werden, ebenso wie eine leichtgängige Längen- und Höhenverstellung der Lenksäule im geöffneten Zustand der Spanneinrichtung. Allerdings ist ein Schließen der Spanneinrichtung bei dieser Vorrichtung nicht möglich, wenn gerade zwei Zähne der Verzahnungen für die Längen- oder Höhenverstellung übereinanderliegen. Es muß daher vor dem Schließen der Spanneinrichtung in diesen Fällen zunächst die Position der Längen- und Höheneinstellung der Lenksäule, die bremsende Reibung überwindend, leicht verändert werden, bis ein Schließen der Spanneinrichtung möglich ist. Um dies zu verhindern, wurden bereits Einrichtungen vorgeschlagen, die ein Aufeinandertreffen der Zähne der Verzahnungen beim Schließen der Spanneinrichtung verhindern sollen. Diese Teile arbeiten jedoch wenig zuverlässig und der konstruktive Aufwand wird erhöht. Das Problem des Aufeinandertreffens der Zähne der Verzahnungen tritt insbesondere bei der Feststelleinrichtung für die Höhenverstellung auf, da die von dieser Feststelleinrichtung aufzunehmenden Kräfte wesentlich höher sind als die für die Feststelleinrichtung der Längenverstellung geforderte Haltekraft, so daß die Zähne der Verzahnungen für die Vertikalverstellung stärker und höher ausgebildet sein müssen.

Aufgabe der Erfindung ist es, eine verbesserte Vorrichtung der eingangs genannten Art bereitzustellen, durch welche die Feststelleinrichtung für die Höhenverstellung in jeder Position der Höheneinstellung problemlos schließbar ist, wobei die Höhenverstellung möglichst leichtgängig bleiben soll und möglichst verschleißfest ausgebildet sein soll. Erfindungsgemäß gelingt dies durch eine Vorrichtung mit den Merkmalen des Patentanspruchs 1.

Durch die Verwendung einer Reibschlußverbindung mit einem derartigen Lamellenpaket kann eine ausreichend große Haltekraft der Feststelleinrichtung auch im Crash-Fall für die Höhenverstellung erreicht werden. Diese bei Zulassungstests der Lenksäule überprüfte Crash-Haltekraft muß dabei mehr als 1000 kg betragen. Das Lamellenpaket muß dazu eine entsprechend große Anzahl von Lamellen bzw. entsprechend großflächige Lamellen aufweisen. Bevorzugterweise sind für diese Crash-Haltekraft mindestens zwölf große Lamellen und mindestens elf dazwischenliegende kleine Lamellen vorgesehen. Durch die Verwendung der Federelemente, die die Klemmbacken im geöffneten Zustand der ersten Feststelleinrichtung voneinander distanzieren, können sich die Lamellen im geöffneten Zustand der ersten Feststelleinrichtung im freigegebenen Raum zwischen den Klemmbacken ungehindert entfalten, und die Reibung bei der Höhenverstellung wird dadurch trotz der aufgrund der geforderten Haltekraft notwendigen großen Anzahl von Lamellen bzw. großen Reibungsflächen der Lamellen relativ gering gehalten.

Bevorzugterweise ist die zweite Feststelleinrichtung ebenfalls als Reibschlußverbindung ausgebildet, wobei diese Reibschlußverbindung günstigerweise ebenfalls ein Lamellenpaket umfassen kann. Für die Längenverstellung sind wesentlich geringere Haltekräfte im Bereich von 400 kg gefordert. Das Lamellenpaket kann daher entsprechend weniger Lamellen umfassen, so daß die bei der Längenverstellung auftretende Reibung verringert wird. Prinzipiell wäre für die Feststelleinrichtung der Längenverstellung auch die Verwendung von zwei Reibplatten denkbar und möglich, die im geschlossenen Zustand der Spanneinrichtung gegeneinander verspannt werden. Von den beiden Reibplatten könnten auch eine oder beide eine gerillte Oberfläche zur Erhöhung der Reibung im geschlossenen Zustand der Spanneinrichtung aufwiesen (wodurch auch ein mehr oder minder starker Formschluß erreicht werden könnte). Eine der beiden Reibplatten könnte dabei auch mit einer Verzahnung versehen sein.

Erfindungsgemäß ist weiters eine Einrichtung zur federelastischen Beaufschlagung der großen Lamellen sowie vorzugsweise auch der kleinen Lamellen in Richtung der Höhenverstellung der Lenksäule vorgesehen. Hierbei werden aufeinanderfolgende große Lamellen und gegebenenfalls auch aufeinanderfolgende kleine Lamellen wechselweise in Auf- und Abwärtsrichtung oder auch in abwechselnder diagonaler Auf- und Abwärtsrichtung beaufschlagt. Dadurch wird das Lagerspiel bei einer großen auf die Lenksäule wirkenden Verstellkraft in Richtung der Höhenverstellung im geschlossenen Zustand der ersten Feststelleinrichtung verringert.

Die Verwendung von Lamellenpaketen zur Fixierung von verstellbaren Lenksäulen ist bereits bekannt, insbesondere aus den folgenden Schriften: EP 0 802 104 A1, GB 2 092 966 A, EP 671 308 A1, DE-OS 2 412 696, DE-OS 1 780 061. Bei den aus diesen Schriften bekannten verstellbaren Lenksäulen wird ein Lamellenpaket zur gleichzeitigen Fixierung der Längen- sowie Höhenverstellung der Lenksäule verwendet. Aufgrund der für die Höhenverstellung erforderlichen Haltekraft muß ein solches Lamellenpaket eine entsprechend große Anzahl von Lamellen bzw. entsprechend großflächige Lamellen aufweisen. Es tritt dadurch eine relativ große Reibung im geöffneten Zustand der Spanneinrichtung auf. Insbesondere die Längenverstellung der Lenksäule, bei der es für den Benutzer aus anatomischen Gründen schwieriger ist, eine entsprechende Kraft aufzubringen, wird dadurch erschwert. Aber auch für die Höhenverstellung ist eine relativ große Reibungskraft zu überwinden.

Weitere Vorteile und Einzelheiten der Erfindung werden im folgenden anhand der in der Zeichnung dargestellten Ausführungsbeispiele von Lenksäulenverstelleinrichtungen erläutert. In dieser zeigen:
- Fig. 1: eine Seitenansicht und
- Fig. 2: einen Querschnitt eines ersten Ausführungsbeispiels einer Lenksäulenverstelleinrichtung;
- Fig. 3: einen vergrößerten Ausschnitt aus Fig. 2;
- Fig. 4: einen Längsschnitt durch das erste Ausführungsbeispiel;
- Fig. 5: eine Ansicht auf die Innenseite der Mantelrohr in der Richtung A von Fig. 4;
- Fig. 6: eine schaubildliche auseinandergezogene Darstellung der ersten Feststelleinrichtung;
- Fig. 7: eine Ansicht von unten in der Richtung B von Fig. 8 und
- Fig. 8: einen Schnitt entlang der Linie C-C von Fig. 7 der zusammengesetzten Klemmbacken entsprechend einem zweiten Ausführungsbeispiel einer Lenksäulenverstelleinrichtung;
- Fig. 9 und Fig. 10: den ersten und den zweiten Klemmbacken in der Fig. 7 entsprechenden Ansicht;
- Fig. 11 und Fig. 12: Schnitte entlang der Linien D-D und E-E von Fig. 10;
- Fig. 13: ein im Zusammenhang mit dem zweiten Ausführungsbeispiel der Lenksäulenverstelleinrichtung verwendbares Lamellenpaket in schaubildlicher, teilweise auseinandergezogener Darstellung;
- Fig. 14: einen Querschnitt durch ein Ausführungsbeispiel einer Lenksäulenverstelleinrichtung gemäß der Erfindung;
- Fig. 15: einen vergrößerten Ausschnitt aus Fig. 14;
- Fig. 16: einen Schnitt entlang der Linie F-F von Fig. 14;
- Fig. 17: eine Ansicht einer großen Lamelle entsprechend diesem Ausführungsbeispiel der Erfindung;
- Fig. 18: einen Querschnitt durch ein weiteres Ausführungsbeispiel einer Lenksäulenverstelleinrichtung;
- Fig. 19: einen horizontalen Längsschnitt durch dieser Lenksäulenverstelleinrichtung und
- Fig. 20: einen Schnitt entlang der Linie G-G von Fig. 19.

Die Maßstäbe der einzelnen Zeichnungen sind unterschiedlich. Bei der Beschreibung der einzelnen Ausführungsbeispiele werden für gleichartige oder zumindest gleichwirkende Bauteile gleiche Bezugszeichen verwendet.

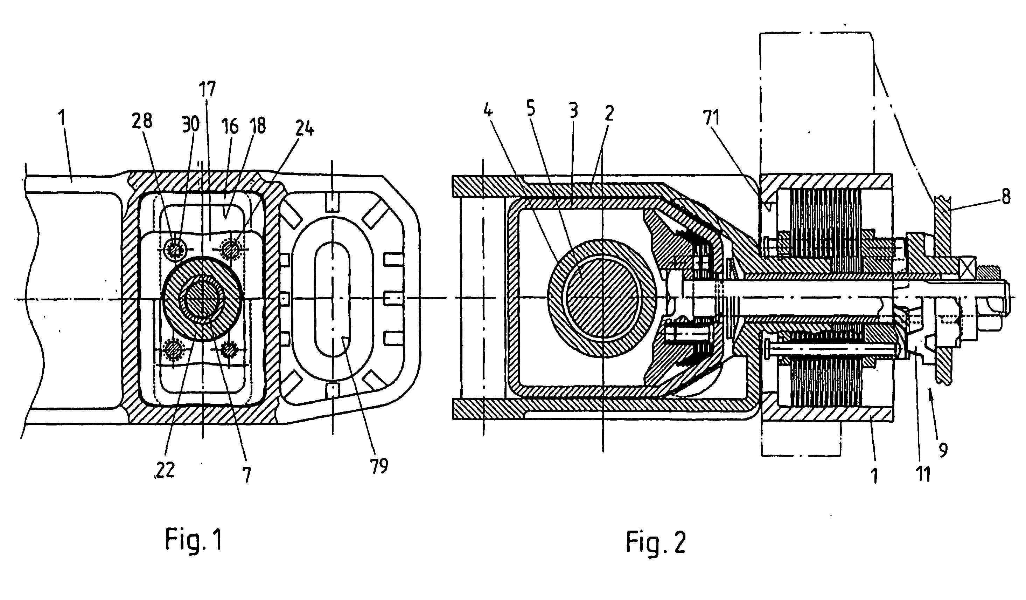

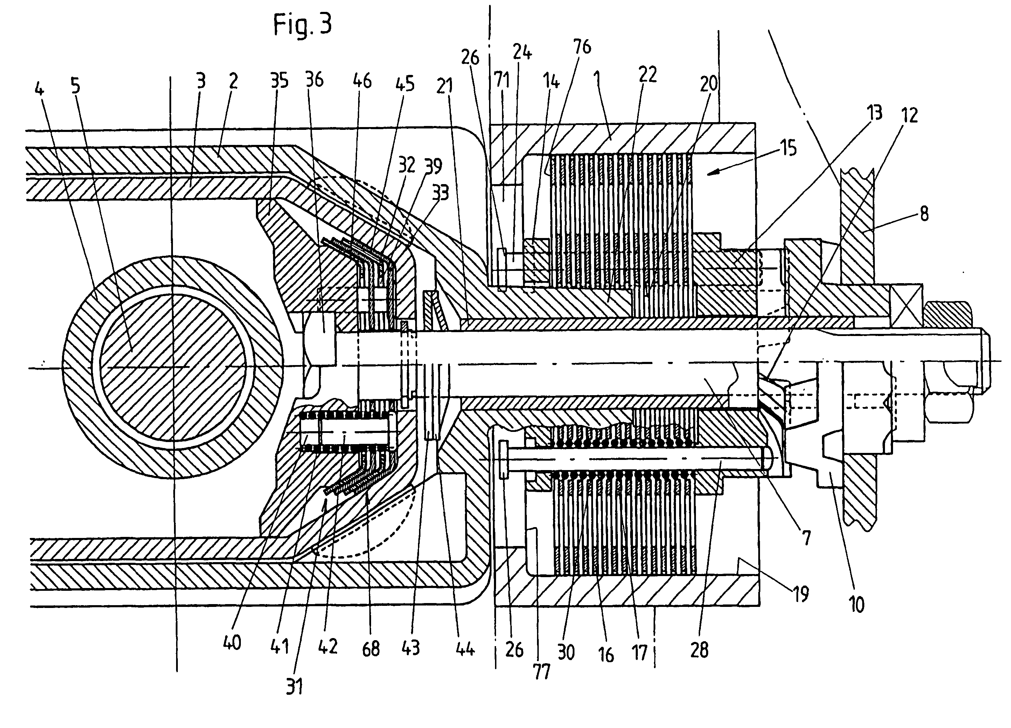

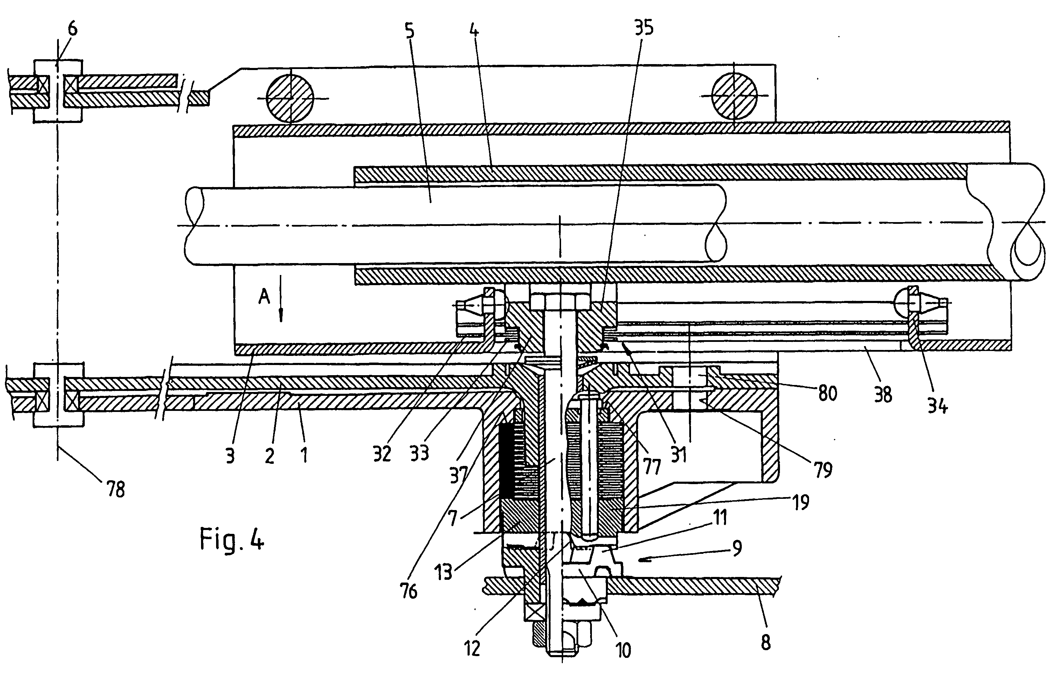

Ein erstes Ausführungsbeispiel einer Lenksäulenverstelleinrichtung ist in den Fig. 1 bis 6 dargestellt. In einem am Chassis des Kraftfahrzeugs festlegbaren Konsolenteil 1 ist ein Führungsteil 2 über Bolzen 6, die vertikale Wangen des Konsolenteils und Führungsteils durchsetzen, um eine horizontale, senkrecht zur Lenkspindel 5 stehende Achse 78 verschwenkbar gelagert. Im Führungsteil 2 ist ein Mantelrohr 3 in Axialrichtung der Lenkspindel 5 verschiebbar gelagert. Das Mantelrohr 3 umgibt die in einem Hüllrohr 4 drehbar gelagerte Lenkspindel.

Durch eine Verschwenkung des Führungsteils 2, welche im Bereich von einigen Winkelgraden liegt, gegenüber dem chassisfesten Konsolenteil 1 wird die Höhen- bzw. Neigungsverstellung der Lenksäule, und durch die axiale Verschiebung des Mantelrohrs 3 gegenüber dem Führungsteil 2 wird die Längenverstellung der Schwenksäule durchgeführt. Die Lenkspindel weist dazu in bekannter Weise ein Kardangelenk (im Bereich der Bolzen 6) und einen teleskopierbaren Abschnitt auf. Diese Teile der Lenksäule sind nicht Gegenstand der vorliegenden Erfindung und werden hier nicht näher beschrieben.

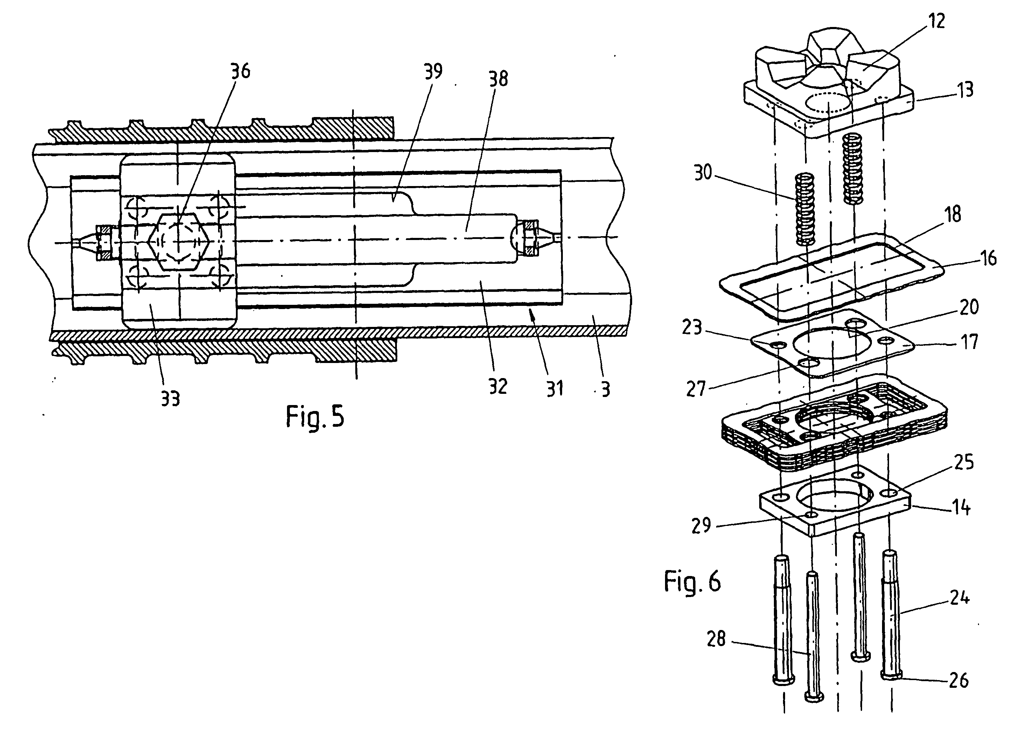

Zwischen dem Konsolenteil und dem Führungsteil einerseits und dem Führungsteil und dem Mantelrohr andererseits sind erste und zweite Feststelleinrichtungen vorgesehen, die über eine gemeinsame Spanneinrichtung betätigbar sind. Die Spanneinrichtung umfaßt einen Spannbolzen 7 und ein über einen Spannhebel 8 betätigbares Spannglied 9. Das Spannglied 9 wird beispielsweise von einem Nockenteil 10 gebildet, die mindestens einen Nocken 11 aufweist, der mit einer zumindest abschnittsweise schraubenflächenförmig ausgebildeten bzw. Schrägflächen 12 (vgl. Fig. 6) aufweisenden Oberfläche zusammenwirkt, die hier von der Außenseite eines ersten Klemmbackens 13 der ersten Feststelleinrichtung gebildet wird. Durch Verschwenkung des Spannhebels 8, beispielsweise über einen Winkelbereich von etwa 45°, wird auf den Klemmbacken 13 eine nach innen wirkende Kraft und auf den Spannbolzen 7 eine Zugkraft ausgeübt.

Die erste Feststelleinrichtung umfaßt ein Lamellenpaket 15, das zwischen dem ersten Klemmbacken 13 und dem zweiten, von einem Teil des Konsolenteils 1 gebildeten Klemmbacken 76 angeordnet ist. Das Lamellenpaket 15 wird von großen Lamellen 16 und kleinen Lamellen 17 gebildet. Die großen Lamellen 16 sind schwimmend in einer Kammer 19 im Konsolenteil 1 gelagert, deren Innenkontur mit kleinstem Spiel der Außenkontur der großen Lamellen entspricht. Die großen Lamellen sind dadurch insbesondere in Richtung der Höhenverstellung der Lenksäule unverschiebbar, während sie in axialer Richtung des Spannbolzens 7 durch Kämmen verschiebbar sind, wobei ihr gegenseitiger Abstand veränderbar ist. Die großen Lamellen weisen weiters eine innere Ausnehmung 18 auf, durch welche die Verschwenkung des Führungsteils 2 gegenüber dem Konsolenteil 1 im geöffneten Zustand der ersten Feststelleinrichtung ermöglicht wird, wie aus dem folgenden klarer hervorgehen wird. Durch diese innere Ausnehmung tritt der Spannbolzen 7, der weiters durch eine Öffnung 71 im Konsolenteil 1 ragt.

Die kleinen Lamellen 17 weisen ebenfalls eine zentrale Ausnehmung 20 auf, durch welche der Spannbolzen 7 verläuft. Auf dem Spannbolzen 7 ist eine diesen lagernde Hülse 21 angeordnet, die sich ebenfalls durch die zentralen Ausnehmungen 20 in den kleinen Lamellen erstreckt. Weiters werden die zentralen Ausnehmungen 20 eines innen liegenden Teils der kleinen Lamellen 17 von einem rohrförmigen Fortsatz 22 des Führungsteils 2 durchsetzt, der zur Lagerung des Spannbolzens 7 im Führungsteil 2 dient. Dadurch wird eine stabile Lagerung des Spannbolzens 7 erzielt, der bei diesem Ausführungsbeispiel ja nur auf einer Seite der Lenksäule gelagert ist und diese nicht vollständig durchsetzt.

Die kleinen Lamellen 17 weisen weiters diagonal gegenüberliegend angeordnete Bohrungen 23 zur Aufnahme von Führungsbolzen 24 auf. Diese Führungsbolzen 24 sind im ersten Klemmbacken 13 befestigt und erstrecken sich mit Spiel durch Führungsbohrungen 25 in der Anschlagplatte 14, wobei ihr Kopf 26 jeweils den Rand der Führungsbohrung 25 auf der Rückseite der Anschlagplatte 14 übergreift und einen Anschlag für die erste Feststelleinrichtung bei geöffneter Spanneinrichtung bildet. Die Führungsbolzen 24 nehmen weiters die kleinen Lamellen 17 bei einer Verschwenkung des Führungsteils 2 gegenüber dem Konsolenteil 1 bei geöffneter erster Feststelleinrichtung mit. Der erste Klemmbacken 13 ist hierbei in Vertikalrichtung gegenüber dem Konsolenteil 1 in der Kammer 19 verschiebbar. Auf einer Schulter 77 des Konsolenteils 1 im Bereich der Öffnung 71 stützt sich die Anschlagplatte 14 ab.

Die kleinen Lamellen 17 weisen weiters diagonal gegenüberliegende Federlöcher 27 auf, die von den Federbolzen 28 durchsetzt sind. Diese sind in gleicher Weise wie die Führungsbolzen 24 im ersten Klemmbacken 13 fest und durchsetzen die Anschlagplatte 14 durch die Federbolzen-Führung 29. Die Federlöcher 27 in den kleinen Lamellen 17 sind so groß ausgebildet, daß sie auf den Federbolzen 28 angeordnete, als Schraubenfedern ausgebildete Druckfedern 30 aufnehmen können, die sich gegen den Klemmbacken 13 und die Anschlagplatte 14 abstützen und diese bei geöffneter Spanneinrichtung auseinanderdrücken, bis die Köpfe 26 der Führungsbolzen 24 und Federbolzen 28 an der Anschlagplatte 14 anliegen. Die Anschlagplatte 14 gleitet bei der Höhenverstellung auf der Schulter 77. Bei geöffneter Spanneinrichtung distanzieren somit die Druckfedern die Anschlagplatte 14 und damit den zweiten Klemmbacken 76 vom ersten Klemmbacken 13.

In den Fig. 2 bis 4 ist die geschlossene Position der Spanneinrichtung dargestellt. Die Schnitte sind abschnittsweise oberhalb der Längsachse des Spannbolzens 7 geführt.

Durch die Langlochbohrung 79 und Bohrung 80 ist bevorzugterweise ein Bolzen eingesetzt (der Übersichtlichkeit halber nicht dargestellt in den Figuren) zur Führung des Führungsteils 2 im Konsolenteil 1. Das Konsolenteil 1 kann auch zwei-oder mehrteilig ausgebildet sein. Beispielsweise könnte der zweite Klemmbacken als separates im Inneren der Kammer 19 liegendes Teil ausgebildet sein. Weiters könnten die großen Lamellen 16 des Lamellenpakets 15 anstatt in einer Kammer 19 auf vorzugsweise zwei Führungszapfen, die außerhalb der verschiebbaren kleinen Lamellen 17 angeordnet sind, schwimmend und mit kleinem Spiel gelagert sein. Weiters könnten die großen Lamellen 16 auch einseitig an einem Zapfen befestigt sein, wobei sie einen seitlichen Fortsatz aufweisen, und andererseits auf mindestens einem Führungszapfen über in den Lamellen angeordneten Führungslöchern achsial in Richtung des Führungszapfens verschiebbar gelagert sein. Derartige Lamellen werden als "Flatterlamellen" bezeichnet. Solche Flatterlamellen werden in einem weiteren Ausführungsbeispiel im Zusammenhang mit der zweiten Feststelleinrichtung weiter unten noch genauer erläutert.

Die der Längsverstellung der Lenksäule zugeordnete zweite Feststelleinrichtung umfaßt ein Lamellenpaket 31 mit großen und kleinen Lamellen 32, 33. Die großen Lamellen 32 weisen Öffnungen auf, mit denen sie auf nach innen abstehenden Stegen 34 des Mantelrohres 3 in Axialrichtung des Spannbolzens 7 verschiebbar, aber in der Richtung der Längenverstellung (= Richtung der Lenkspindel) unverschiebbar gelagert sind. Das Lamellenpaket 31 ist zwischen ersten 35 und zweiten Klemmbacken 68 angeordnet. Der erste Klemmbacken 35 ist auf dem Spannbolzen 7 gelagert und nimmt den Kopf 36 des Spannbolzens 7 auf, welcher in eine Schulter des Klemmbackens 35 hintergreift. Dieser Klemmbacken 35 weist weiters Formfortsätze 37 zu beiden Seiten des Spannbolzens 7 auf, welche Ausnehmungen in den kleinen Lamellen 33 durchsetzen. Auf diesen Fortsätzen sind die kleinen Lamellen 33 geführt. Der zweite Klemmbacken 68 wird von der inneren Oberfläche des Mantelrohres 3 im Bereich um das Langloch 38 gebildet, durch welches der Spannbolzen 7 in das Mantelrohr 3 ragt und in welches sich die Formfortsätze 37 des ersten Klemmbackens 35 erstrecken. Die großen Lamellen 32 weisen eine innere Ausnehmung 39 zur Ermöglichung der Verschiebung des Mantelrohres 3 in axialer Richtung der Lenkspindel 5 auf. Im Klemmbacken 35 sind an den Eckpunkten eines gedachten Vierecks Sackbohrungen 40 angebracht, die Druckfedern 41 aufnehmen. In die gegenüberliegenden Enden der als Schraubenfedern ausgebildeten Druckfedern 41 sind Gleitbolzen 42 eingeschoben, deren Kopf die Druckfeder übergreift und sich an seiner Stirnseite gleitend an der Innenfläche des Mantelrohres 3 abstützt. Die Druckfedern 41 und Gleitbolzen 42 durchsetzen die innere Ausnehmung 39 der großen Lamellen 32 sowie Bohrungen in den kleinen Lamellen 33. Bei geöffneter Spanneinrichtung beabstanden diese Druckfedern 41 den ersten Klemmbacken 35 vom von der Innenfläche des Mantelrohres 3 gebildeten zweiten Klemmbacken 68, bis eine Gleitanschlagscheibe 43 an der Außenfläche des Mantelrohres 3 anschlägt. Diese Gleitanschlagscheibe 43 ist verschiebbar auf dem Spannbolzen 7 gelagert und im Bereich ihres äußeren Umfangs wegbegrenzt mit einem Federring 44 verbunden, der auf dem Spannbolzen 7 verschweißt ist.

Aufgrund der geringeren bei der Längenverstellung geforderten Feststellkraft beinhaltet das Lamellenpaket 31 lediglich zwei große und zwei kleine Lamellen. Diese geringe Anzahl von Lamellen wird auch dadurch ermöglicht, daß die Lamellen 32, 33 anschließend an einen inneren in einer Ebene liegenden Bereich obere und untere Randstreifen 45, 46 aufweisen, die in Richtung zur Lenkspindel abgewinkelt sind. Die Innenfläche des den zweiten Klemmbacken 68 bildenden Bereichs des Mantelrohres 3 sowie die den Lamellen zugewandte Außenfläche des Klemmbackens 35 sind dabei entsprechend zu dieser Form der Lamellen abgewinkelt ausgebildet. Auf diese Weise wird beim Verspannen des Lamellenpakets eine Keilwirkung hervorgerufen, welche die Haltekraft dieser Reibschlußverbindung erhöht.

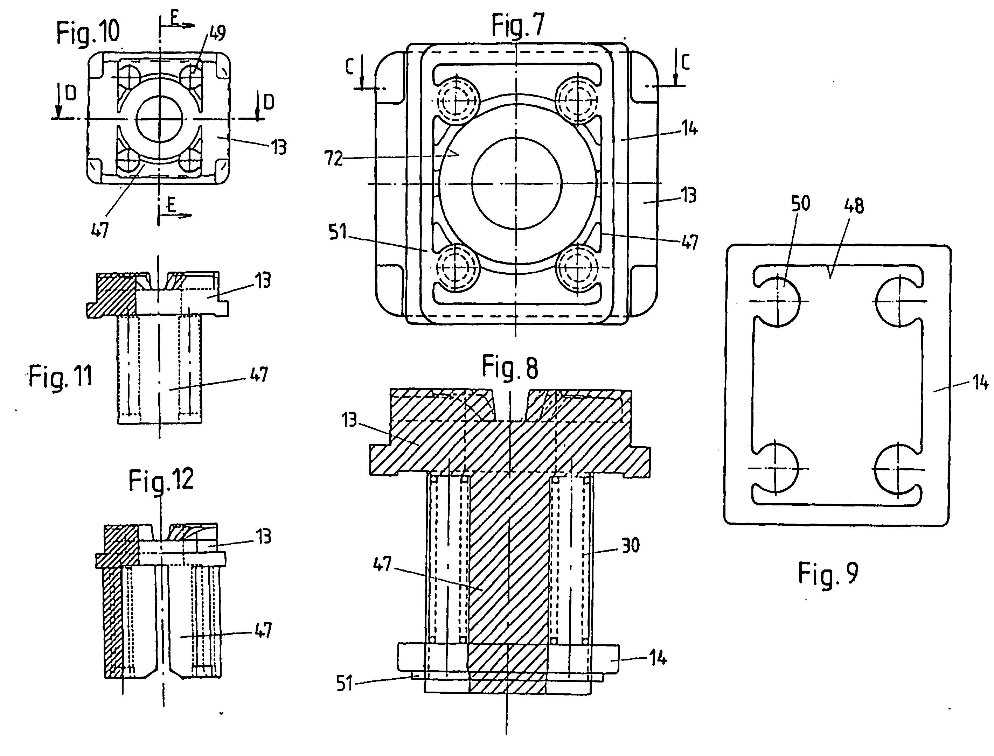

Ein zweites Ausführungsbeispiel einer Lenksäulenverstelleinrichtung weist eine etwas veränderte Anordnung für die der Höhenverstellung zugeordnete erste Feststelleinrichtung auf, wie dies in den Fig. 7 bis 13 dargestellt ist. Die zentrale Ausnehmung 20 der kleinen Lamellen 17 wird hier von einem Fortsatz 47 des ersten Klemmbackens 13 durchsetzt, welche dadurch auf dem Fortsatz 47 verschiebbar gelagert sind. Dieser Fortsatz 47 durchsetzt weiters eine innere Öffnung 48 der Anschlagplatte 14, die auf dem Fortsatz 47 des ersten Klemmbackens 13 in axialer Richtung des Spannbolzens 7 verschiebbar gelagert ist. Im Fortsatz 47 sind weiters vier an den Eckpunkten eines gedachten Vierecks angeordnete kanalartige Ausnehmungen 49 vorgesehen, in denen Druckfedern 30 angeordnet sind, die sich am ersten Klemmbacken 13 und an der Anschlagplatte 14 abstützen. Die Anschlagplatte 14 weist dazu in die kanalartigen Ausnehmungen 49 ragende ohrenförmige Fortsätze 50 auf. Zur Begrenzung der Verschiebung der Anschlagplatte 14 auf dem Fortsatz 47 bei geöffneter Spanneinrichtung ist auf dem Fortsatz 47 ein fixer Anschlagring 51 aufgestemmt. Der Fortsatz 47 weist eine zentrale, abgesetzte Durchtrittsöffnung 72 auf, durch die der Spannbolzen 7 und die auf ihm gelagerte Hülse 21 tritt und in die der rohrförmige Fortsatz 22 des Führungsteils 2 ragt.

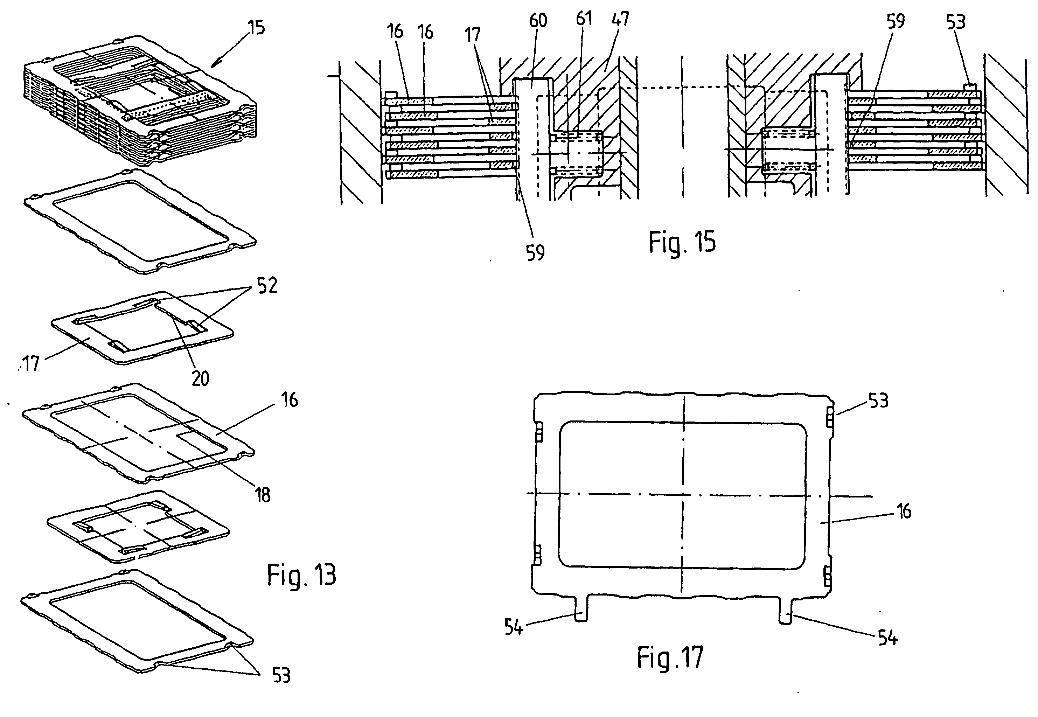

Wie aus Fig. 13 ersichtlich, weisen die kleinen Lamellen 17 im an ihre zentrale Ausnehmung 20 angrenzenden Bereich Federarme 52 auf. Diese durchsetzen die innere Ausnehmung 18 der benachbarten großen Lamelle 16 und stützen sich an der Seitenwandung der nächsten kleinen Lamelle 17 ab. Die aufeinanderfolgenden kleinen Lamellen werden dazu jeweils um 180° verdreht. Diese Federarme unterstützen mit geringer Federkraft die Separierung des Lamellenpakets 15 mittels der Druckfeder 30 im geöffneten Zustand der Spanneinrichtung. Bei entsprechend starker Ausbildung der Federarme 52 könnten die Druckfedern 30 auch entfallen. Andererseits könnten bei einer Ausbildung der ersten Feststelleinrichtung entsprechend den Fig. 7 bis 12 auch kleine Lamellen ohne derartige Federarme 52 verwendet werden.

Federarme zur Beabstandung des Federpakets im geöffneten Zustand der Spanneinrichtung könnten in analoger Weise auch zusätzlich zu den Federarmen 52 an den kleinen Lamellen 17 oder anstelle dieser auch an den großen Lamellen 16 16 angebracht sein, welche in diesem Fall außerhalb der Umfangskontur der kleinen Lamellen liegen und wegbegrenzt sein müßten.

Bei der in Fig. 13 dargestellten Ausführungsform der großen Lamellen weisen diese über eine ihrer Seitenflächen vorstehende seitliche Erhöhungen 53 auf, die weniger weit über die Seitenflächen der großen Lamellen vorstehen als die Dicke der kleinen Lamellen. Es wird durch diese Erhöhungen ein zu starkes Verkippen des schwimmenden Lamellenpakets im geöffneten Zustand der Spanneinrichtung verhindert. Es könnten auch etwa halb so große, gegenüberliegende Erhöhungen auf beiden Seiten der Lamellen angebracht sein.

Bei den gezeigten Ausführungsbeispielen ist der erste Klemmbacken 13 mit kleinem Spiel an der Kammerwand 19 verschiebbar geführt. Durch eine entsprechende Dicke dieses Klemmbackens wird eine Verkantfreiheit beim Schließen des Spannhebels erzielt. Grundsätzlich wäre auch eine Führung des ersten Klemmbackens 13 in der Ausnehmung der Anschlagplatte 14 über seinen Fortsatz 47 möglich.

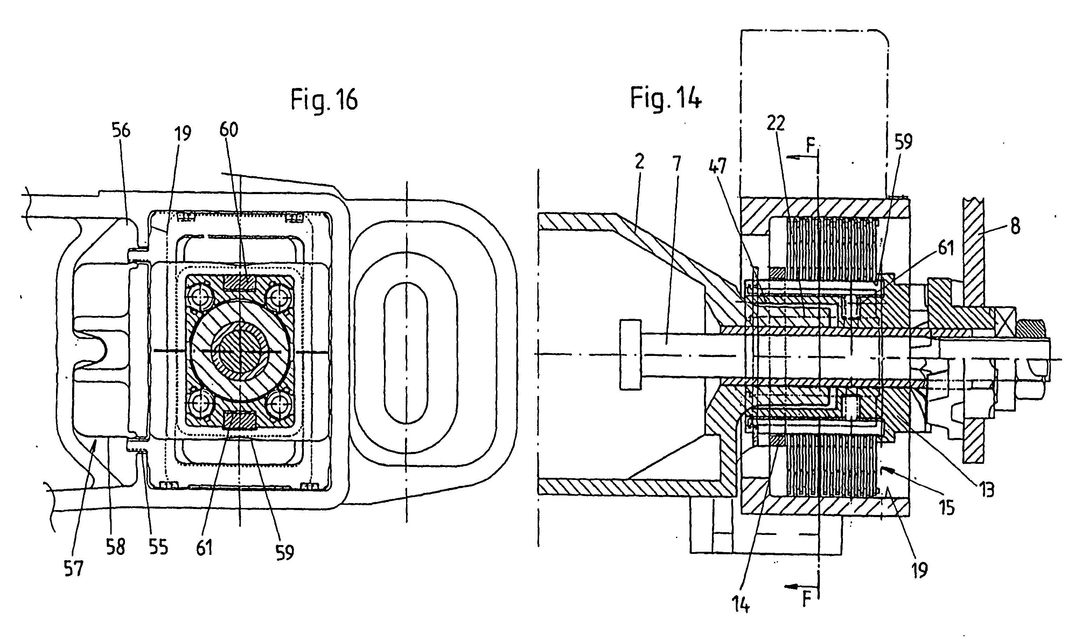

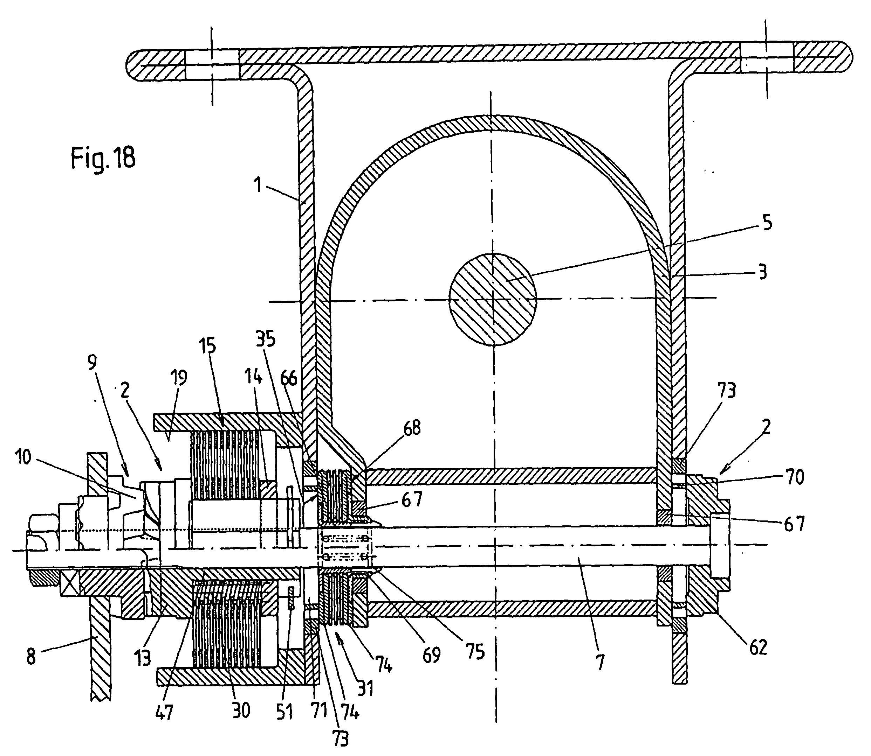

Anhand der Fig. 14 bis 17 wird nun eine Ausführungsform der Erfindung erläutert, die dem zuvor beschriebenen zweiten Ausführungsbeispiel der Lenksäulenverstelleinrichtung entspricht, außer daß hier erfindungsgemäß zusätzliche Maßnahmen zur Verhinderung bzw. zur Verringerung des Spiels der ersten Feststelleinrichtung im geschlossenen Zustand der Spanneinrichtung (bei größerer Kraftaufbringung in der Richtung der Höhenverstellung) vorgesehen sind. Mehrere Lamellen müssen auf Anschlag stützen. Die Grundidee ist es hierbei, die großen ebenso wie die kleinen Lamellen abwechselnd nach oben und nach unten vorzuspannen, so daß diese sich im geöffneten Zustand der Spanneinrichtung jeweils unter geringer Federkraft an die entsprechende Wandung anlegen und im geschlossenen Zustand der Spanneinrichtung somit ein durch ein Lagerspiel der Lamellen in der Kammer 19 und dem Fortsatz 47 auftretendes Spiel ausgeschaltet wird. Mehrere der Lamellen (ca. 15 %) müssen hierzu auf Anschlag anliegen. Die großen Lamellen 16 weisen zu diesem Zweck beispielsweise außen über ihre Umfangskontur vorspringende Nasen 54 auf, die durch Schlitze 55 in der seitlichen Wandung der Kammer 19 aus dieser heraustreten und in einen Rippenraum 56 ragen. In diesem Rippenraum 56 ist eine Blattfeder 57 festgelegt, deren Arme 58 die Nasen 54 nach oben bzw. unten beaufschlagt. Es sind zwei Arten von großen Lamellen 16 vorgesehen, die sich durch die Anordnung ihrer Nasen 54 unterscheiden. Bei der ersten Art dieser Lamellen (mit ungerader Nummer: 1, 3, 5, .....) liegen die Nasen 54 in Fig. 16 gesehen jeweils etwas weiter unten als bei der zweiten Art der Lamellen (mit gerader Nummer: 2, 4, 6, .....). Die beiden Arten von großen Lamellen folgen abwechselnd aufeinander, so daß die großen Lamellen 16 von den Federarmen 58 der Blattfeder 57 abwechselnd nach oben und nach unten beaufschlagt werden und trotzdem ein Verschieben der kleinen Lamellen 17 möglich ist. Es könnte auch nur eine Art von großen Lamellen vorgesehen sein, wobei die unterschiedlichen Höhen der Nasen durch Verschwenkung der benachbarten großen Lamellen um eine in Fig. 17 gesehen vertikale Achse um jeweils 180 ° erreicht wird. Die Federarme 58 ermöglichen auf diese Weise auch eine Anpassung an die Entform-Konizität im Druckguß an der Wand der Kammer 19.

Auch eine Vorspannung der (großen und/oder kleinen) Lamellen in diagonaler Richtung ist möglich.

Die kleinen Lamellen 17 weisen jeweils eine Vertiefung 59 am Rand ihrer zentralen Ausnehmung 20 auf, und zwar im Bereich ihres oberen oder unteren Schenkels. Die kleinen Lamellen werden abwechselnd um 180° um die Horizontalachse (in Fig. 16 gesehen) verschwenkt im Federpaket angeordnet, so daß die Ausnehmungen 59 abwechselnd auf der Ober- und auf der Unterseite liegen. Im Bereich dieser Ausnehmungen 59 sind im Fortsatz 47 des ersten Klemmbackens 13 geführte Druckbalken 60 vorgesehen, die von Druckfedern 61 beaufschlagt sind. Die Druckbalken 60 beaufschlagen somit die kleinen Lamellen 17 abwechselnd nach oben (gerade Nummer: 2, 4, 6, ...) und nach unten (ungerade Nummer: 1, 3, 5, ....), je nachdem, auf welcher Seite die Vertiefung 59 liegt. Der seitlich der Vertiefung 59 liegende Bereich der kleinen Lamelle 17 liegt dadurch auf der der Beaufschlagung durch den Druckbalken 60 gegenüberliegenden Seite jeweils fest am Fortsatz 47 an, so daß insgesamt Spielfreiheit (auch unter hoher Verschiebekraft) der kleinen Lamellen gegenüber dem Fortsatz 47 gegeben ist. Die durch die Einrichtung zur federelastischen Beaufschlagung der großen und kleinen Lamellen über die Blattfeder 57 und den Druckbalken 60 mit Druckfeder 61 sich ergebenden Stellungen und Anschlagpositionen der großen 16 und kleinen Lamellen 17 sind aus Fig. 15 ersichtlich.

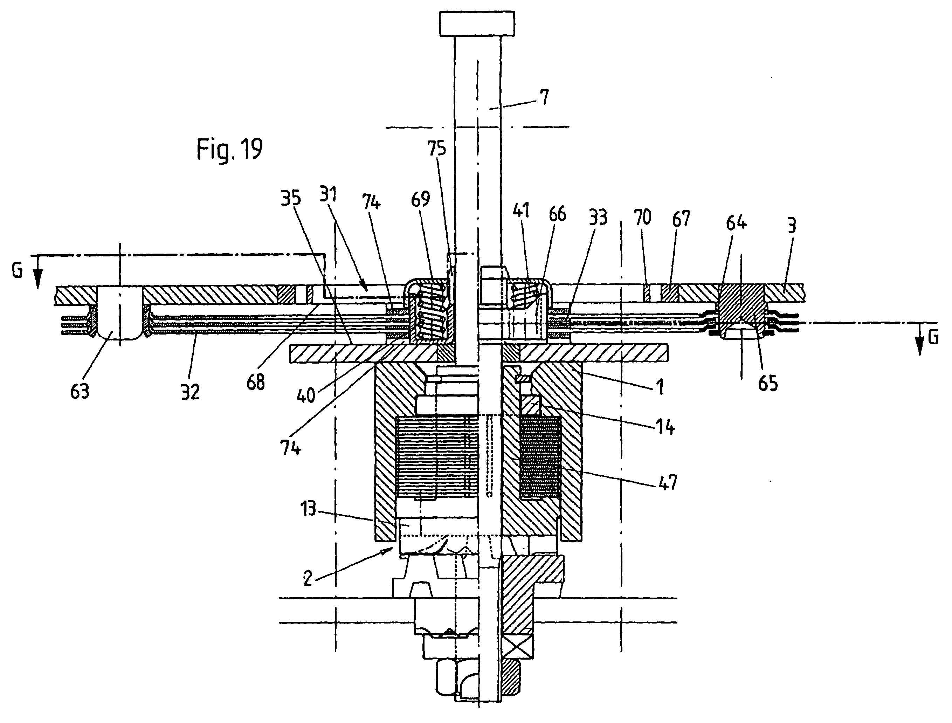

Bei dem in den Fig. 18 bis 20 dargestellten Ausführungsbeispiel einer Lenksäulenverstelleinrichtung ist ein die Lenksäule vollständig durchsetzender Spannbolzen 7 vorgesehen. Das Konsolenteil 1 ist hier U-förmig mit zwei Wangen ausgebildet und umgibt das Mantelrohr 3, das seinerseits die Lenkspindel 5 umgibt. Das den Spannbolzen 7 hier beidseits lagernde Führungsteil 2 ist bei diesem Ausführungsbeispiel an den Außenseiten des Konsolenteils 1 vorgesehen und wird durch die Klemmbacke 13 sowie durch die auf der gegenüberliegenden Seite des Konsolenteils 1 an diesem außen anliegende Kopf-Klemmbacken 62 gebildet, die den Kopf des Spannbolzens 7 aufnimmt. Die durch die Bolzen 6 gebildete Schwenkachse fällt hier mit der Achse des Spannbolzens 7 zusammen.

Die erste Feststelleinrichtung für die Höhenverstellung der Lenksäule ist analog zu dem anhand der Fig. 9 bis 13 beschriebenen zweiten Ausführungsbeispiel der Lenksäulenverstelleinrichtung aufgebaut. Der Klemmbacken 13 weist wiederum einen die großen und kleinen Lamellen 16, 17 durchsetzenden Fortsatz 47 auf, auf dem die Anschlagplatte 14 verschiebbar gelagert ist. Zur Begrenzung der Verschiebung bei geöffneter Spanneinrichtung ist ein Clips/Anschlagring 51 vorgesehen. Im Fortsatz 47 sind kanalartige Ausnehmungen vorgesehen, in denen als Schraubenfedern ausgebildete Druckfedern 30 angeordnet sind, die sich gegen den Klemmbacken 13 und die Anschlagplatte 14 abstützen, wodurch die Klemmbacken 13, 76 bei geöffneter Spanneinrichtung auseinandergedrückt werden. In diesem Fall sind zur Erzielung einer schmalen Bauweise allerdings nur zwei oberhalb und unterhalb des Spannbolzens 7 angeordnete kanalartige Ausnehmungen und Druckfedern vorgesehen.

Das Lamellenpaket 15 kann auch halbiert sein und die zweite Hälfte der in der Kammer 19 angeordneten Lamellen kann auch rechts unter der Kopf-Klemmbacke 62 vorgesehen sein.

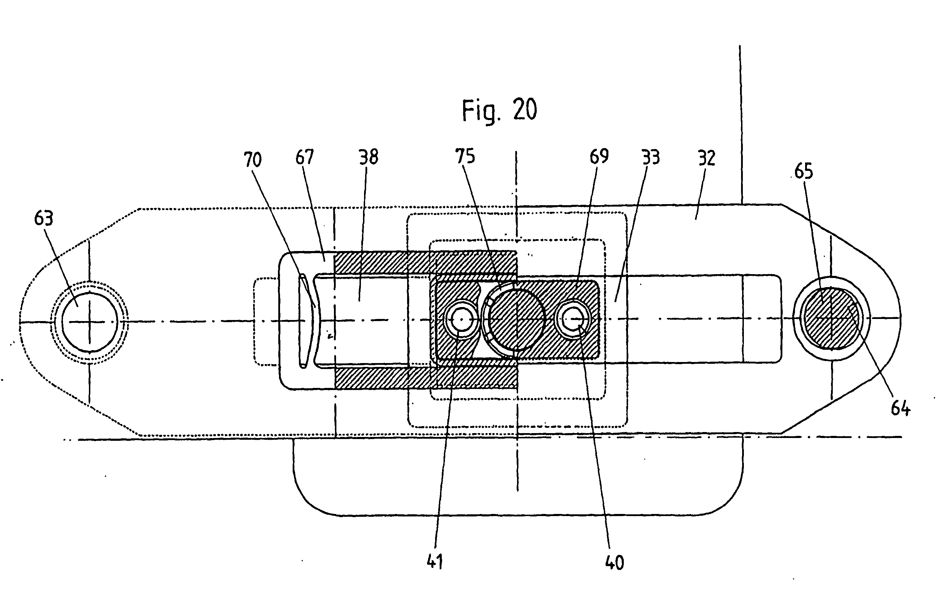

Die zweite Feststelleinrichtung ist bei diesem Ausführungsbeispiel zwischen dem Konsolenteil 1 und dem Mantelrohr 3 angeordnet. Der Konsolenteil 1 ist hierzu in gewissem Umfang federelastisch ausgebildet. Die großen Lamellen 32 der Feststelleinrichtung für die Längsverstellung sind einseitig an Zapfen 63 am Mantelrohr 3 befestigt. Auf der gegenüberliegenden Seite weisen sie Führungslöcher 64 auf, die von einem weiteren Führungszapfen 65 des Mantelrohres 3 mit etwas Spiel durchsetzt werden. Die großen Lamellen 32 sind somit nach Art von "Flatterlamellen" ausgebildet, wobei sie - zumindest im Bereich um ihre inneren Ausnehmungen 18 - in ihrem gegenseitigen Abstand veränderbar sind, in axialer Richtung der Lenkspindel aber unverschiebbar gelagert sind. Die aus den großen und kleinen Lamellen 32, 33 gebildete Lamellengruppe ist zwischen erster und zweiter Führungslamelle 74 angeordnet und bildet zusammen mit diesen ein Lamellenpaket 31, das eine zentrale Durchtrittsöffnung zum Durchtritt des Spannbolzens 7 aufweist. Der Distanz-Federtopf 66 weist eine Rastnase 75 auf, auf der die kleinen Lamellen 33 und 74 gelagert sind und die durch das Langloch 38 in das Mantelrohr 3 tritt. In diesem Distanz-Federtopf 66 sind in Fig. 20 gesehen links und rechts des Spannbolzens 7 Sackbohrungen 40 vorgesehen, in denen Druckfedern 41 angeordnet sind. Diese Druckfedern 41 stützen sich somit einerseits am Distanz-Federtopf 66, andererseits an der Distanz-Federwanne 69 ab, die im Bereich des Langlochs 38 eine das Langloch durchsetzende topfartige Ausformung aufweist. Die Distanz-Federwanne 69 ist auf dem Hals der Rastnase 75 des Distanz-Federtopfes 66 in Axialrichtung des Spannbolzens 7 verschiebbar gelagert. Die Vorsprünge der Rastnase 75 am freien Ende begrenzen die Verschiebung der kleinen Lamellen 33 und 74 im geöffneten Zustand der Spanneinrichtung. Die an der Außenseite des Mantelrohres 3 anliegende Oberfläche der Distanz-Federwanne 69 ist als Gleitfläche ausgebildet.

Der erste Klemmbacken 35 wird hier von der dem Lamellenpaket 31 zugewandten Innenfläche des Konsolenteils 1 und der zweite Klemmbacken 68 von der dem Lamellenpaket 31 zugewandten Außenfläche des Mantelrohres 3 gebildet. Das Lamellenpaket 31 wird bei geöffneter Spanneinrichtung durch Distanzieren der ersten und zweiten Klemmbacken 35, 68 mittels der Distanziergruppe 37, 69, 66 mit den Druckfedern 41 freigestellt.

Das Langloch 38 wird von einem Längs-Gleiteinsatz 67 begrenzt, welcher Anschlagbügel 70 für die Distanz-Federwanne 69 zur Begrenzung der axialen Verschiebung des Mantelrohres 3 aufweist.

Analog zu den großen Lamellen 32 der zweiten Feststelleinrichtung für die Längenverstellung könnten auch die großen Lamellen 16 der ersten Feststelleinrichtung für die Höhenverstellung als "Flatterlamellen" ausgebildet sein (anstelle ihrer schwimmenden Lagerung).

### Legende zu den Hinweisziffern:

- 1: Konsolenteil
- 2: Führungsteil
- 3: Mantelrohr
- 4: Hüllrohr
- 5: Lenkspindel
- 6: Bolzen
- 7: Spannbolzen
- 8: Spannhebel
- 9: Spannglied
- 10: Nockenteil
- 11: Nocken
- 12: Schrägfläche
- 13: Klemmbacken
- 14: Anschlagplatte
- 15: Lamellenpaket
- 16: große Lamelle
- 17: kleine Lamelle
- 18: innere Ausnehmung
- 19: Kammer
- 20: zentrale Ausnehmung
- 21: Hülse
- 22: rohrförmiger Fortsatz
- 23: Führungsbolzenloch
- 24: Führungsbolzen
- 25: Führungsbohrung
- 26: Kopf
- 27: Federloch
- 28: Federbolzen
- 29: Federbolzen-Führung
- 30: Druckfeder
- 31: Lamellenpaket
- 32: große Lamelle
- 33: kleine Lamelle
- 34: Steg
- 35: Klemmbacken
- 36: Kopf
- 37: Formfortsatz
- 38: Langloch
- 39: innere Ausnehmung
- 40: Sackbohrung
- 41: Druckfeder
- 42: Gleitbolzen
- 43: Gleitanschlagscheibe
- 44: Federring
- 45: Randstreifen
- 46: Randstreifen
- 47: Fortsatz
- 48: Öffnung
- 49: Ausnehmung
- 50: Fortsatz
- 51: Clips bzw. Anschlagring
- 52: Federarm
- 53: Erhöhung
- 54: Nase
- 55: Schlitz
- 56: Rippenraum
- 57: Blattfeder
- 58: Federarm
- 59: Vertiefung
- 60: Druckbalken
- 61: Druckfeder
- 62: Kopf-Klemmbacke
- 63: Zapfen
- 64: Führungslöcher
- 65: Führungszapfen
- 66: Distanz-Federtopf
- 67: Längs-Gleiteinsatz
- 68: Klemmbacken
- 69: Distanz-Federwanne
- 70: Anschlagbügel
- 71: Öffnung
- 72: Öffnung
- 73: Vertikal-Gleiteinsatz
- 74: Führungslamelle
- 75: Rastnase
- 76: Klemmbacken
- 77: Schulter
- 78: Achse
- 79: Langloch
- 80: Bohrung

## Patentansprüche

1. Vorrichtung an einer Lenksäule für Kraftfahrzeuge zur Längen- und Höhenverstellung der Lenksäule mit einem am Chassis des Fahrzeugs festlegbaren Konsolenteil (1), einem Führungsteil (2), in dem ein Spannbolzen (7) in axialer Richtung des Spannbolzens (7) verschiebbar gelagert ist, der durch eine Öffnung (71) im Konsolenteil (1) ragt und der für die Höhenverstellung der Lenksäule zusammen mit dem Führungsteil (2) senkrecht zu seiner axialen Ausdehnung und im wesentlichen senkrecht zur axialen Ausdehnung der Lenkspindel (5) gegenüber dem Konsolenteil (1) verschiebbar ist, und einem Mantelrohr (3), das ein in axialer Richtung der Lenksäule sich erstreckendes Langloch (38) aufweist, durch das der Spannbolzen (7) ragt, und das für die Längenverstellung der Lenksäule in axialer Richtung der Lenkspindel (5) verschiebbar ist, wobei eine den Spannbolzen (7) und ein Spannglied (9) umfassende Spanneinrichtung vorgesehen ist, über die eine erste Feststelleinrichtung für die Höhenverstellung der Lenksäule und eine separate zweite Feststelleinrichtung für die Längenverstellung der Lenksäule gemeinsam öffen- und schließbar sind, **dadurch gekennzeichnet, daß** die erste Feststelleinrichtung als Reibschlußverbindung ausgebildet ist und ein Lamellenpaket (15) mit großen und kleinen Lamellen (16, 17) umfaßt, die im Lamellenpaket einander abwechseln und vom Spannbolzen (7) durchsetzt werden und von denen die großen Lamellen (16) im bzw. am Konsolenteil (1) in ihrem gegenseitigen Abstand veränderbar, aber in Richtung der Höhenverstellung der Lenksäule unverschiebbar gelagert sind und eine innere Ausnehmung (18) zur Ermöglichung der Verschiebung des Spannbolzens (7) gegenüber dem Konsolenteil (1) im geöffneten Zustand der ersten Feststelleinrichtung für die Höhenverstellung der Lenksäule aufweisen und von denen die kleinen Lamellen (17) in axialer Richtung des Spannbolzens (7) verschiebbar, aber gegenüber dem Spannbolzen (7) in Richtung der Höhenverstellung der Lenksäule unverschiebbar gelagert sind und sich bei einer Verschiebung des Spannbolzens (7) gegenüber dem Konsolenteil (1) im geöffneten Zustand der ersten Feststelleinrichtung gegenüber den großen Lamellen (16) verschieben, wobei das Lamellenpaket (15) zwischen ersten (13) und zweiten Klemmbacken (76) angeordnet ist, zwischen denen das Lamellenpaket im geschlossenen Zustand der ersten Feststelleinrichtung geklemmt ist und zwischen denen Federelemente (30, 52) wirken, die die Klemmbacken (13, 76) im geöffneten Zustand der ersten Feststelleinrichtung voneinander distanzieren, und daß zur Verringerung des Lagerspiels bei großer Verstellkraft der Lenksäule in Richtung der Höhenverstellung im geschlossenen Zustand der ersten Feststelleinrichtung eine Einrichtung zur federelastischen Beaufschlagung der großen Lamellen (16) sowie vorzugsweise auch der kleinen Lamellen (17) in Richtung der Höhenverstellung der Lenksäule vorgesehen ist, wobei aufeinanderfolgende große Lamellen (16) und gegebenenfalls auch aufeinanderfolgende kleine Lamellen (17) wechselweise in Aufwärts- und in Abwärtsrichtung oder auch in abwechselnder diagonaler Auf- und Abwärtsbrichtung beaufschlagt sind.

2. Vorrichtung nach Anspruch 1, **dadurch gekennzeichnet, daß** das Lamellenpaket (15) in einer Kammer (19) des Konsolenteils (1) angeordnet ist, deren Innenkontur mit kleinem Spiel der Außenkontur der großen Lamellen (16) entspricht, wobei die schwimmend gelagerten großen Lamellen in axialer Richtung des Spannbolzens (7) verschiebbar, aber in Richtung der Höhenverstellung der Lenksäule abgesehen von einem Spiel unverschiebbar gegenüber dem Konsolenteil (1) gelagert sind.

3. Vorrichtung nach Anspruch 2, **dadurch gekennzeichnet, daß** der erste Klemmbacken (13) auf dem Spannbolzen (7) in axialer Richtung des Spannbolzens verschiebbar gelagert ist und der zweite Klemmbacken (76) von einem im Inneren der Kammer (19) liegenden Bereich des Konsolenteils (1) gebildet wird.

4. Vorrichtung nach einem der Ansprüche 1 bis 3, **dadurch gekennzeichnet, daß** sich die von Druckfedern (30) gebildeten Federelemente am ersten Klemmbacken (13) und an einer Anschlagplatte (14) abstützen, die an einer Schulter (77) des Konsolenteils (1), die vorzugsweise im Inneren der Kammer (19) angeordnet ist, und gegenüber dem Kosolenteil (1) in Richtung der Höhenverstellung der Lenksäule verschiebbar gelagert ist.

5. Vorrichtung nach einem der Ansprüche 1 bis 4, **dadurch gekennzeichnet, daß** das Spannglied einen vom Spannhebel (8) verschwenkbaren Nockenteil (10) mit zumindest einem Nocken (11) aufweist, der mit einer Schraubenfläche bzw. Schrägfläche (12) an dem Nockenteil (10) zugewandten Oberfläche des ersten Klemmbackens (13) zusammenwirkt.

6. Vorrichtung nach einem der Ansprüche 1 bis 5, **dadurch gekennzeichnet, daß** im ersten Klemmbacken (13) ein oder mehrere, vorzugsweise mindestens zwei und auf gegenüberliegenden Seiten des Spannbolzens (7) angeordnete, parallel zum Spannbolzen verlaufende Führungsbolzen (24) festgelegt sind, die Führungsbolzenlöcher (23) in den kleinen Lamellen sowie Führungsbohrungen (25) in der Anschlagplatte (14) durchsetzen, wobei der Innendurchmesser der Bohrungen (23, 25) nur geringfügig größer als der Außendurchmesser der Führungsbolzen (24) ist.

7. Vorrichtung nach einem der Ansprüche 1 bis 6, **dadurch gekennzeichnet, daß** am ersten Klemmbacken (13) ein oder mehrere, vorzugsweise mindestens zwei und auf gegenüberliegenden Seiten des Spannbolzens (7) liegende, parallel zum Spannbolzen verlaufende Federbolzen (28) festgelegt sind, deren freie Enden Führungsbohrungen (29) in einer Anschlagplatte (14) mit Spiel durchsetzen und auf denen Druckfedern (30) angeordnet sind, die sich gegen den Klemmbacken (13) und die Anschlagplatte (14) abstützen, wobei die Federbolzen (28) und die auf ihnen angeordneten Druckfedern (30) Federlöcher (27) in den kleinen Lamellen (17) durchsetzten.

8. Vorrichtung nach einem der Ansprüche 1 bis 7, **dadurch gekennzeichnet, daß** der dem Spannhebel benachbarte erste Klemmbacken (13) einen Fortsatz (47) aufweist, der eine zentrale Durchtrittsöffnung aufweist, durch die der Spannbolzen (7) verläuft und der sich durch eine zentrale Ausnehmung (20) in den kleinen Lamellen (17), die nur geringfügig größer ist als die Außenkontur des Fortsatzes (47), sowie durch eine zentrale Öffnung (48) in der Anschlagplatte (14) erstreckt, wobei die Anschlagplatte (14) zusammen mit dem ersten Klemmbacken (13) gegenüber dem Konsolenteil (1) in die Richtung Höhenverstellung der Lenksäule verschiebbar gelagert ist.

9. Vorrichtung nach Anspruch 8, **dadurch gekennzeichnet, daß** im Fortsatz (47) mindestens eine in axialer Richtung des Spannbolzens (7) verlaufende, auf gegenübediegenden Seiten des Spannbolzens (7) angeordnete kanalartige Ausnehmung (49) vorgesehen ist, in der eine Druckfeder (30) angeordnet ist, die sich am ersten Klemmbacken (13) und an der Anschlagplatte (14) abstützen.

10. Vorrichtung nach einem der Ansprüche 1 bis 9, **dadurch gekennzeichnet, daß** die kleinen Lamellen (17) seitlich abstehende Federarme (52) aufweisen, die vorzugsweise innerhalb der inneren Ausnehmung (18) der großen Lamellen (16) liegen und die sich an der Seitenwandung einer benachbarten kleinen Lamelle (17) abstützen.

11. Vorrichtung nach einem der Ansprüche 1 bis 10, **dadurch gekennzeichnet, daß** die großen Lamellen (16) seitlich abstehende Federarme aufweisen, die außerhalb der Umfangskontur der kleinen Lamellen (17) liegen und die sich an der Seitenwandung einer benachbarten großen Lamelle (16) abstützen.

12. Vorrichtung nach einem der Ansprüche 1 bis 11, **dadurch gekennzeichnet, daß** zur Verhinderung eines zu starken Verkippens des Lamellenpakets (15) im geöffneten Zustand der Spanneinrichtung die großen Lamellen (16) über eine ihrer Seitenflächen vorstehende seitliche Erhöhungen (53) aufweisen, die weniger weit als die Dicke der kleinen Lamellen (17) über die Seitenfläche der jeweiligen großen Lamelle (16) vorstehen.

13. Vorrichtung nach Anspruch 12, **dadurch gekennzeichnet, daß** die Einrichtung zur federelastischen Beaufschlagung der großen Lamellen (16) in Richtung der Höhenverstellung in der Ebene der großen Lamellen über die Umfangskontur der großen Lamellen vorspringende Nasen (54) umfaßt, an denen sich in axialer Richtung des Spannbolzens (7) über die Länge des Lamellenpakets (15) erstreckende Federarme (58) anliegen, wobei die Federarme die aufeinanderfolgenden großen Lamellen über die Nasen (54) wechselweise in Aufwärts- und Abwärtsrichtung oder auch diagonal in Auf- und Abwärtsrichtung beaufschlagen.

14. Vorrichtung nach Anspruch 8 und nach Anspruch 13, **dadurch gekennzeichnet, daß** die Einrichtung zur federelastischen Beaufschlagung der kleinen Lamellen (17) Vertiefungen (59) an den Innenseiten der die zentralen Ausnehmungen (20) begrenzenden oberen bzw. unteren Schenkel dieser Lamellen umfaßt, wobei obere und untere Druckbalken (60) vorgesehen sind, die im Bereich dieser Vertiefungen (59) im Fortsatz (47) des ersten Klemmbackens (13) gelagert sind und von Druckfedern (61) beaufschlagt sind und wobei der obere Druckbalken (60) an jedem zweiten der oberen Schenkel der kleinen Lamellen (17) anliegt und von den oberen Schenkeln der dazwischenliegenden kleinen Lamellen durch die entsprechend ausgebildeten Vertiefungen (59) im oberen Schenkel beabstandet ist und der untere Druckbalken an jedem zweiten der unteren Schenkel derjenigen kleinen Lamellen anliegt, deren oberer Schenkel durch die Vertiefungen (59) vom oberen Druckbalken beabstandet sind, und der untere Druckbalken von den unteren Schenkeln der dazwischenliegenden kleinen Lamellen durch die entsprechend ausgebildete Vertiefung (59) im unteren Schenkel beabstandet ist.

15. Vorrichtung nach einem der Ansprüche 1 bis 14, **dadurch gekennzeichnet, daß** der Führungsteil (2) zur Höhenverstellung der Lenksäule am Konsolenteil (1) um eine horizontale, senkrecht zur Lenkspindel (5) stehende Achse (78) gegenüber dem Konsolenteil (1) verschwenkbar ist.

16. Vorrichtung nach einem der Ansprüche 1 bis 15, **dadurch gekennzeichnet, daß** die erste Feststelleinrichtung zwischen dem Konsolenteil (1) und dem Führungsteil (2) und die zweite Feststelleinrichtung zwischen dem Führungsteil (2) und dem Mantelrohr (3) wirkt.

17. Vorrichtung nach einem der Ansprüche 1 bis 16, **dadurch gekennzeichnet, daß** zur Lagerung des Spannbolzens (7) im Führungsteil (2) ein mit dem Führungsteil (2) starr verbundener rohrförmiger Fortsatz (22) vorgesehen ist, der sich in die zentrale Ausnehmung (20) der kleinen Lamellen (17) bzw. in die zentrale Öffnung (72) des Fortsatzes (47) des ersten Klemmbackens (13) erstreckt.

18. Vorrichtung nach einem der Ansprüche 1 bis 15, **dadurch gekennzeichnet, daß** ein die Lenksäule durchsetzender Spannbolzen (7) vorgesehen ist, wobei die erste Feststelleinrichtung zwischen dem vom Klemmbacken (13) und/oder von der Kopf-Klemmbacke (62) gebildeten Teil des Führungsteils (2) und dem Konsolenteil (1) und die zweite Feststelleinrichtung zwischen dem Konsolenteil (1) und dem Mantelrohr (3) angeordnet ist.

19. Vorrichtung nach einem der Ansprüche 1 bis 18, **dadurch gekennzeichnet, daß** die zweite Feststelleinrichtung für die Längenverstellung ebenfalls als Reibschlußverbindung ausgebildet.

20. Vorrichtung nach Anspruch 19, **dadurch gekennzeichnet, daß** die zweite Feststelleinrichtung ein Lamellenpaket (31) mit großen und kleinen Lamellen (32, 33) umfaßt, die im Lamellenpaket einander abwechseln und vom Spannbolzen (7) durchsetzt werden und von denen die großen Lamellen (32) im oder am Mantelrohr (3) in ihrem gegenseitigen Abstand veränderbar, aber in axialer Richtung der Lenkspindel (5) unverschiebbar gelagert sind und eine innere Ausnehmung (38, 39) zur Ermöglichung der Verschiebung des Mantelrohres (3) in axialer Richtung der Lenkspindel (5) im geöffneten Zustand der zweiten Feststelleinrichtung aufweisen und von denen die kleinen Lamellen in axialer Richtung des Spannbolzens (7) verschiebbar, aber gegenüber dem Spannbolzen (7) in axialer Richtung der Lenkspindel (5) unverschiebbar gelagert sind und sich bei einer axialen Verschiebung des Mantelrohres (3) gegenüber den großen Lamellen (32) verschieben, wobei das Lamellenpaket (31) zwischen erstem und zweitem Klemmbacken (35, 68) angeordnet ist, zwischen denen das Lamellenpaket im geschlossenen Zustand der zweiten Feststelleinrichtung geklemmt ist und zwischen denen Federelemente, vorzugsweise in Form von Druckfedern (41) angeordnet sind, die die Klemmbacken (35, 68) im geöffneten Zustand der zweiten Feststelleinrichtung voneinander distanzieren.

21. Vorrichtung nach Anspruch 20, **dadurch gekennzeichnet, daß** der zweite Klemmbacken (68) von der Innenwandung des Mantelrohres (3) im Bereich um das Langloch (38) gebildet wird.

22. Vorrichtung nach Anspruch 20 oder Anspruch 21, **dadurch gekennzeichnet, daß** der zweite Klemmbacken (35) am freien Ende des Spannbolzens (7) gelagert ist, wobei der Kopf (36) des Spannbolzens eine Durchtrittsöffnung durch den zweiten Klemmbacken (35) hintergreift und der zweite Klemmbacken (35) das Mantelrohr (3) stützend führt.

23. Vorrichtung nach einem der Ansprüche 20 bis 22, **dadurch gekennzeichnet, daß** der zweite Klemmbacken (35) einen Formfortsatz (37) aufweist, auf dem die kleinen Lamellen (33) in axialer Richtung des Spannbolzens (7) verschiebbar gelagert sind.

24. Vorrichtung nach Anspruch 23, **dadurch gekennzeichnet, daß** die Druckfedern in Sackbohrungen im Formfortsatz (37) des zweiten Klemmbackens (35) angeordnet sind.

25. Vorrichtung nach einem der Ansprüche 20 bis 24, **dadurch gekennzeichnet, daß** die großen und kleinen Lamellen (32, 33) obere und untere Randstreifen (45, 46) aufweisen, die in Richtung zur Lenkspindel (5) abgewinkelt sind, wobei die den Lamellen zugewandten Oberflächen der ersten und zweiten Klemmbacken (68, 35) entsprechend der Form der Klemmbacken ausgebildete Abwinkelungen aufweisen.

26. Vorrichtung nach Anspruch 20, **dadurch gekennzeichnet, daß** die Druckfedern zwischen einer Distanz-Federwanne (69) und einem Distanz-Federtopf (66) gelagert sind, wobei die Distanz-Federwannen (69) im Bereich des Langlochs (38) des Mantelrohrs (3) eine das Langloch durchsetzende topfartige Ausformung aufweist.

27. Vorrichtung nach Anspruch 26, **dadurch gekennzeichnet, daß** die Distanz-Federwanne (69) und der Distanz-Federtopf (66) in Ausnehmungen in den Führungslamellen (74) gelagert sind und von diesen bei einer Verschiebung des Mantelrohrs (3) gegenüber dem Konsolenteil (1) mitgenommen werden.

28. Vorrichtung nach einem der Ansprüche 1 bis 27, **dadurch gekennzeichnet, daß** die zweite Feststelleinrichtung durch zwei durch den Spannbolzen gegeneinander verspannbare Druckplatten gebildet wird, von denen eine vorzugsweise von der Innenwandung des Mantelrohres im Bereich um das Langloch gebildet wird.

## Claims

1. A device on a steering column for motor vehicles for adjusting the length and height of the steering column, comprising a bracket part (1) which is securable to the chassis of the vehicle, a guide part (2) in which a clamping bolt (7) is mounted so as to be displaceable in the axial direction of the clamping bolt (7) which projects through an opening (71) in the bracket part (1) and which, for adjusting the height of the steering column, is displaceable in relation to the bracket part (1) together with the guide part (2) perpendicularly to its axial extent and substantially perpendicularly to the axial extent of the steering spindle (5), and a casing tube (3) provided with a slot (38) through which the clamping bolt (7) projects and which extends in the axial direction of the steering column, the casing tube (3) being displaceable in the axial direction of the steering spindle (5) for adjusting the length of the steering column, wherein a clamping means is provided which comprises the clamping bolt (7) and a clamping member (9) and by means of which a first fixing means for the height adjustment of the steering column and a separate, second fixing means for the length adjustment of the steering column are jointly openable and closable, **characterised in that** the first fixing means is formed as a frictional connection and comprises a lamella stack (15) with large and small lamellae (16, 17) which alternate in the lamella stack and through which the clamping bolt (7) extends and of which the large lamellae (16) are variable in their mutual spacing in or on the bracket part (1), but are non-displaceably mounted in the direction of the height adjustment of the steering column and have an inner aperture (18) for allowing the displacement of the clamping bolt (7) in relation to the bracket part (1) in the open state of the first fixing means for the height adjustment of the steering column, and of which the small lamellae (17) are displaceable in the axial direction of the clamping bolt (7), but are non-displaceably mounted in relation to the clamping bolt (7) in the direction of the height adjustment of the steering column and are displaced in relation to the large lamellae (16) in the event of displacement of the clamping bolt (7) in relation to the bracket part (1) in the open state of the first fixing means, wherein the lamella stack (15) is arranged between first (13) and second (76) clamping jaws, between which the lamella stack is clamped in the closed state of the first fixing means and between which spring members (30, 52) act which space the clamping jaws (13, 76) apart in the open state of the first fixing means, and **in that**, in order to reduce the bearing clearance in the event of a great adjusting force of the steering column in the direction of the height adjustment in the closed state of the first fixing means, a means for resiliently acting upon the large lamellae (16) and preferably also the small lamellae (17) in the direction of the height adjustment of the steering column is provided, wherein consecutive large lamellae (16) and optionally also consecutive small lamellae (17) are acted upon alternately in the upwards and downwards directions or also in alternating diagonal upwards and downwards directions.

2. A device according to claim 1, **characterised in that** the lamella stack (15) is arranged in a chamber (19) of the bracket part (1), the inner contour of which chamber (19) corresponds with slight clearance to the outer contour of the large lamellae (16), wherein the floatingly mounted large lamellae are displaceable in the axial direction of the clamping bolt (7), but, apart from a clearance, are non-displaceably mounted in relation to the bracket part (1) in the direction of the height adjustment of the steering column.

3. A device according to claim 2, **characterised in that** the first clamping jaw (13) is mounted on the clamping bolt (7) so as to be displaceable in the axial direction of the clamping bolt, and the second clamping jaw (76) is formed by a region of the bracket part (1) lying inside the chamber (19).

4. A device according to any one of claims 1 to 3, **characterised in that** the spring members, formed by compression springs (30), are supported on the first clamping jaw (13) and on a stop plate (14) which is mounted on a shoulder (77) of the bracket part (1) and is displaceable in relation to the bracket part (1) in the direction of the height adjustment of the steering column, the shoulder (77) preferably being arranged inside the chamber (19).

5. A device according to any one of claims 1 to 4, **characterised in that** the clamping member has a cam part (10) which is pivotable by the clamping lever (8) and is provided with at least one cam (11) which co-operates with a helicoidal surface or inclined surface (12) on the outer surface of the first clamping jaw (13), the said outer surface facing the cam part (10).

6. A device according to any one of claims 1 to 5, **characterised in that** one or more, preferably at least two guide bolts (24) arranged on opposite sides of the clamping bolt (7) and extending parallel to the clamping bolt are secured in the first clamping jaw (13) and extend through guide-bolt holes (23) in the small lamellae and guide bores (25) in the stop plate (14), wherein the inner diameter of the bores (23, 25) is only slightly larger than the outer diameter of the guide bolts (24).

7. A device according to any one of claims 1 to 6, **characterised in that** one or more, preferably at least two spring bolts (28) lying on opposite sides of the clamping bolt (7) and extending parallel to the clamping bolt are secured on the first clamping jaw (13), and the free ends of the spring bolts (28) extend with clearance through guide bores (29) in a stop plate (14), and compression springs (30), which are supported against the clamping jaw (13) and the stop plate (14), are arranged on the spring bolts (28), wherein the spring bolts (28) and the compression springs (30) arranged thereon extend through spring holes (27) in the small lamellae (17).

8. A device according to any one of claims 1 to 7, **characterised in that** the first clamping jaw (13), adjacent to the clamping lever, is provided with an extension (47) which has a central passage opening, through which the clamping bolt (7) passes, and which extends through a central aperture (20) in the small lamellae (17), which central aperture (20) is only slightly larger than the outer contour of the extension (47), and through a central opening (48) in the stop plate (14), wherein the stop plate (14), together with the first clamping jaw (13), is mounted so as to be displaceable in relation to the bracket part (1) in the direction of the height adjustment of the steering column.

9. A device according to claim 8, **characterised in that** at least one channel-type aperture (49), extending in the axial direction of the clamping bolt (7) and arranged on opposite sides of the clamping bolt (7), is provided in the extension (47), in which aperture (49) is arranged a compression spring (30) supported on the first clamping jaw (13) and on the stop plate (14).

10. A device according to any one of claims 1 to 9, **characterised in that** the small lamellae (17) have laterally projecting resilient arms (52) which preferably lie within the inner aperture (18) of the large lamellae (16) and which are supported against the side wall of an adjacent small lamella (17).

11. A device according to any one of claims 1 to 10, **characterised in that** the large lamellae (16) have laterally projecting resilient arms which lie outside the circumferential contour of the small lamellae (17) and which are supported against the side wall of an adjacent large lamella (16).

12. A device according to any one of claims 1 to 11, **characterised in that**, in order to prevent excessive tilting of the lamella stack (15) in the open state of the clamping means, the large lamellae (16) have lateral elevations (53) which project beyond one of their lateral surfaces and which project less far beyond the lateral surface of the respective large lamella (16) than the thickness of the small lamellae (17).

13. A device according to claim 12, **characterised in that** the means for resiliently acting upon the large lamellae (16) in the direction of the height adjustment comprises lugs (54) which project beyond the circumferential contour of the large lamellae in the plane of the large lamellae and against which rest resilient arms (58) extending in the axial direction of the clamping bolt (7) over the length of the lamella stack (15), wherein the resilient arms act upon the consecutive large lamellae via the lugs (54) alternately in the upwards and downwards directions or also diagonally in the upwards and downwards directions.

14. A device according to claim 8 and claim 13, **characterised in that** the means for resiliently acting upon the small lamellae (17) comprises depressions (59) on the insides of the upper and lower limbs bounding the central apertures (20) of these lamellae, wherein upper and lower pressure bars (60) are provided which are mounted in the region of these depressions (59) in the projection (47) of the first clamping jaw (13) and are acted upon by compression springs (61) and wherein the upper pressure bar (60) rests against each second one of the upper limbs of the small lamellae (17) and is spaced apart from the upper limbs of the interposed small lamellae by the correspondingly formed depressions (59) in the upper limb, and the lower pressure bar rests against each second one of the lower limbs of the small lamellae whose upper limbs are spaced apart from the upper pressure bar by the depressions (59), and the lower pressure bar is spaced apart from the lower limbs of the interposed small lamellae by the correspondingly formed depression (59) in the lower limb.

15. A device according to any one of claims 1 to 14, **characterised in that** the guide part (2) for adjusting the height of the steering column on the bracket part (1) is pivotable in relation to the bracket part (1) about a horizontal axis (78) extending perpendicularly to the steering spindle (5).

16. A device according to any one of claims 1 to 15, **characterised in that** the first fixing means acts between the bracket part (1) and the guide part (2) and the second fixing means acts between the guide part (2) and the casing tube (3).

17. A device according to any one of claims 1 to 16, **characterised in that**, in order to mount the clamping bolt (7) in the guide part (2), a tubular extension (22) is provided which is rigidly connected to the guide part (2) and which extends into the central aperture (20) in the small lamellae (17) and into the central opening (72) in the extension (47) of the first clamping jaw (13).

18. A device according to any one of claims 1 to 15, **characterised in that** a clamping bolt (7) extending through the steering column is provided, wherein the first fixing means is arranged between the bracket part (1) and that part of the guide part (2) which is formed by the clamping jaw (13) and/or by the head-clamping jaw (62), and the second fixing means is arranged between the bracket part (1) and the casing tube (3).

19. A device according to any one of claims 1 to 18, **characterised in that** the second fixing means for adjusting the length is also formed as a frictional connection.

20. A device according to claim 19, **characterised in that** the second fixing means comprises a lamella stack (31) with large and small lamellae (32, 33) which alternate in the lamella stack and through which the clamping bolt (7) extends and of which the large lamellae (32) are variable in their mutual spacing in or on the casing tube (3), but are non-displaceably mounted in the axial direction of the steering spindle (5) and have an inner aperture (38, 39) for allowing the displacement of the casing tube (3) in the axial direction of the steering spindle (5) in the open state of the second fixing means, and of which the small lamellae are displaceable in the axial direction of the clamping bolt (7), but are non-displaceably mounted in relation to the clamping bolt (7) in the axial direction of the steering spindle (5) and are displaced in relation to the large lamellae (32) in the event of axial displacement of the casing tube (3), wherein the lamella stack (31) is arranged between first and second clamping jaws (35, 68), between which the lamella stack is clamped in the closed state of the second fixing means and between which are arranged spring members, preferably in the form of compression springs (41), which space the clamping jaws (35, 68) apart in the open state of the second fixing means.

21. A device according to claim 20, **characterised in that** the second clamping jaw (68) is formed by the inner wall of the casing tube (3) in the region around the slot (38).

22. A device according to claim 20 or claim 21, **characterised in that** the second clamping jaw (35) is mounted at the free end of the clamping bolt (7), wherein the head (36) of the clamping bolt engages behind a passage opening through the second clamping jaw (35), and the second clamping jaw (35) guides and supports the casing tube (3).

23. A device according to any one of claims 20 to 22, **characterised in that** the second clamping jaw (35) has a moulded extension (37) on which the small lamellae (33) are mounted so as to be displaceable in the axial direction of the clamping bolt (7).

24. A device according to claim 23, **characterised in that** the compression springs are arranged in blind bores in the moulded extension (37) of the second clamping jaw (35).

25. A device according to any one of claims 20 to 24, **characterised in that** the large and small lamellae (32, 33) have upper and lower edge strips (45, 46) which are bent towards the steering spindle (5), wherein those surfaces of the first and second clamping jaws (68, 35) which face the lamellae have returns formed in accordance with the shape of the clamping jaws [*sic* - lamellae].

26. A device according to claim 20, **characterised in that** the compression springs are mounted between a spacing-spring trough (69) and a spacing-spring pot (66), wherein the spacing-spring troughs (69) have, in the region of the slot (38) of the casing tube (3), a pot-type formation extending through the slot.

27. A device according to claim 26, **characterised in that** the spacing-spring trough (69) and the spacing-spring pot (66) are mounted in apertures in the guide lamellae (74) and are carried along by them in the event of displacement of the casing tube (3) in relation to the bracket part (1).

28. A device according to any one of claims 1 to 27, **characterised in that** the second fixing means is formed by two pressure plates which can be clamped in relation to one another by the clamping bolt and of which one is preferably formed by the inner wall of the casing tube in the region around the slot.

## Revendications

1. Dispositif de réglage en longueur et en hauteur de la colonne de direction d'un véhicule comportant une pièce de console (1) qui se fixe au châssis du véhicule, une pièce de guidage (2) recevant un boulon de tension (7) coulissant suivant la direction axiale de ce boulon (7), ce boulon débouchant d'une ouverture (71) de la pièce de console (1) et pouvant coulisser pour le réglage en hauteur de la colonne de direction avec la pièce de guidage (2) perpendiculairement à son extension axiale et principalement perpendiculairement à l'extension axiale de la colonne de direction (5) par rapport à la pièce de console (1), ainsi qu'un tube enveloppe (3) qui en ayant un trou oblong (38) s'étendant dans la direction axiale de la colonne de direction, est traversé par le boulon de serrage (7) et peut coulisser dans la direction axiale de la broche de direction (5) pour le réglage en longueur de la colonne de direction, et dans lequel une installation de serrage comprenant le boulon de serrage (7) et un organe de serrage (9), permet d'ouvrir et de fermer ensemble une première installation de blocage du réglage en hauteur de la colonne de direction et une seconde installation de fixation, distincte, pour le réglage en longueur de la colonne de direction,
**caractérisé en ce que**
la première installation de blocage est réalisée sous la forme d'une liaison par friction et comprend un paquet de lamelles (15) composé de grandes et de petites lamelles (16, 17), et ces lamelles qui alternent dans le paquet de lamelles sont traversées par le boulon de serrage (7) et parmi ces lamelles, les grandes lamelles (16) pouvant voir leur écartement modifié dans ou sur la pièce de console (1), mais ces lamelles étant bloquées en coulissement pour le réglage en hauteur de la colonne de direction, et elles comportent une cavité intérieure (18) pour permettre de coulisser le boulon de serrage (7) par rapport à la pièce de console (1) lorsque la première installation de blocage est ouverte pour le réglage en hauteur de la colonne de direction, alors que les petites lamelles (17) peuvent coulisser dans la direction axiale du boulon de serrage (7) mais sont bloquées vis-à-vis du boulon de serrage (7) dans la direction du réglage en hauteur de la colonne de direction, mais peuvent coulisser par coulissement du boulon de serrage (7) par rapport à la pièce de console (1) lorsque la première installation de blocage est ouverte, par rapport au grandes lamelles (16),
le paquet de lamelles (15) étant installé entre les premiers (13) et les seconds mors (76), entre lesquels le paquet de lamelles est serré lorsque la première installation de blocage est fermée et entre lesquels agissent des éléments de ressort (30, 52) qui écartent les mors de serrage (13, 76) l'un de l'autre lorsque la première installation de blocage est ouverte, et
pour diminuer le jeu de palier pour une force de réglage importante de la colonne de direction dans le sens du réglage en hauteur lorsque la première installation de blocage est fermée, il y a une installation pour solliciter par l'élasticité des ressorts les grandes lamelles (16) et de préférence également les petites lamelles (17) dans le sens du réglage en hauteur de la colonne de direction,
les grandes lamelles (16) qui se suivent ainsi que le cas échéant également les petites lamelles successives (17) sont sollicitées alternativement dans le sens montant et dans le sens descendant et aussi par une sollicitation alternée en diagonale dans le sens montant et dans le sens descendant.

2. Dispositif selon la revendication 1,
**caractérisé en ce que**
le paquet de lamelles (15) est installé dans une chambre (19) de la pièce de console (1) dont le contour intérieur correspond avec un faible jeu au contour extérieur des grandes lamelles (16),
les grandes lamelles montées flottantes pouvant coulisser dans la direction axiale du boulon de serrage (7) tout en étant bloquées en coulissement par rapport à la pièce de console (1) dans le sens du réglage en hauteur de la colonne de direction, abstraction faite du jeu.

3. Dispositif selon la revendication 2,
**caractérisé en ce que**
le premier mors (13) est monté coulissant sur le boulon de serrage (7) dans la direction axiale de celui-ci et le second mors (76) est formé par la zone de la pièce de console (1) située à l'intérieur de la chambre (19).

4. Dispositif selon l'une quelconque des revendications 1 à 3,
**caractérisé en ce que**
les éléments de ressort constitués par des ressorts de compression (30) s'appuient contre le premier mors (13) et contre une plaque de butée (14) prévue sur un épaulement (77) de la pièce de console (1), de préférence à l'intérieur de la chambre (19) et coulissant par rapport à la pièce de console (1) dans le sens du réglage en hauteur de la colonne de direction.

5. Dispositif selon l'une quelconque des revendications 1 à 4,
**caractérisé en ce que**
l'organe de serrage comporte une partie de came (10) basculant avec un levier de serrage (8), et ayant au moins une came (11) coopérant avec une surface de vis ou une surface inclinée (12) de la surface du premier mors (13) tournée vers la partie de came (10).

6. Dispositif selon l'une quelconque des revendications 1 à 5,
**caractérisé en ce que**
dans le premier mors (13) un ou plusieurs, de préférence au moins deux, boulons de guidage (24) prévus sur les côtés opposés du boulon de serrage (7) sont parallèles à ce boulon de serrage, ces boulons de guidage (24) traversant des orifices de guidage (23) dans les petites lamelles et des orifices de guidage (25) dans la plaque de butée (14),
le diamètre intérieur des perçages (23, 25) n'étant que légèrement supérieur au diamètre extérieur des boulons de guidage (24).

7. Dispositif selon l'une quelconque des revendications 1 à 6,
**caractérisé en ce qu'**
un ou plusieurs et de préférence au moins deux goujons à ressort (28) parallèles aux boulons de serrage sont prévus sur le premier mors (13) et de part et d'autre du boulon de serrage (7), ces goujons de guidage parallèles traversent l'extrémité libre des perçages de guidage (29) dans une plaque de butée (14) avec du jeu et reçoivent les ressorts de compression (30) qui s'appuient contre les mors (13) et la plaque de butée (14),
les goujons à ressort (28) et les ressorts de compression (30) qu'ils portent traversant des trous à ressort (27) dans les petites lamelles (17).

8. Dispositif selon l'une quelconque des revendications 1 à 7,
**caractérisé en ce que**
le premier mors (13) voisin du levier de serrage comporte un prolongement (47) ayant un orifice de passage central traversé par le boulon de serrage (7) et qui s'étend à travers une cavité centrale (20) dans les petites lamelles (17) qui n'est que légèrement plus grande que le contour extérieur du prolongement (47) ainsi qu'à travers un orifice central (48) de la plaque de butée (14),
la plaque de butée (14) et le premier mors (13) étant montés coulissant par rapport à la pièce de console (1) dans le sens du réglage en hauteur de la colonne de direction.

9. Dispositif selon la revendication 8,
**caractérisé en ce que**
le prolongement (47) comporte au moins une cavité (49) dirigée dans la direction axiale du boulon de serrage (7), ayant une forme de canal et prévue sur les côtés opposés du boulon de serrage (7), cette cavité recevant un ressort de compression (30) qui s'appuie contre le premier mors (13) et contre la plaque de butée (14).

10. Dispositif selon l'une quelconque des revendications 1 à 9,
**caractérisé en ce que**
les petites lamelles (17) ont des bras à ressort (52) venant latéralement en saillie, qui se situent de préférence dans la cavité intérieure (18) des grandes lamelles (16) et s'appuient contre la paroi latérale d'une petite lamelle voisine (17).

11. Dispositif selon l'une quelconque des revendications 1 à 10,
**caractérisé en ce que**
les grandes lamelles (16) comportent des bras à ressort venant latéralement en saillie, situés à l'extérieur du contour périphérique des petites lamelles (17) et qui s'appuient contre la paroi latérale d'une grande lamelle voisine (16).

12. Dispositif selon l'une quelconque des revendications 1 à 11,
**caractérisé en ce que**
pour éviter un basculement trop important du paquet de lamelles (15) lorsque l'installation de serrage est ouverte, les grandes lamelles (16) ont des bossages latéraux (53) qui dépassent de leur surface latérale, et qui débordent moins loin de la surface latérale de chaque grande lamelle (16) respective, moins que l'épaisseur des petites lamelles (17).

13. Dispositif selon la revendication 12,
**caractérisé en ce que**
pour solliciter élastiquement par ressort les grandes lamelles (16) dans le sens du réglage en hauteur, l'installation comporte dans le plan des grandes lamelles, des becs (54) venant en saillie par rapport au contour périphérique des grandes lamelles, becs contre lesquels s'appuient dans la direction axiale du boulon de serrage (7) des bras de ressort (58) s'étendant sur la longueur du paquet de lamelles (15),
les bras de ressort sollicitant les grandes lamelles successives par les becs (54), de manière alternée dans le sens montant et dans le sens descendant mais aussi dans la direction diagonale, dans le sens montant et le sens descendant.

14. Dispositif selon l'une quelconque des revendications 8 et 13,
**caractérisé en ce que**
l'installation de sollicitation élastique par ressort des petites lamelles (17) comporte des cavités (59) sur le côté intérieur des branches supérieures ou inférieures délimitant l'ouverture centrale (20) de ces lamelles,
des barres de poussée (60) supérieures et inférieures étant prévues logées au niveau de ces cavités (59) dans le prolongement (47) du premier mors (13) et sollicitées par des ressorts de compression (61), et
la barre de poussée supérieure (60) s'appliquant contre chaque seconde branche supérieure des petites lamelles (17) en étant écartées des branches supérieures des petites lamelles intermédiaires par les cavités (59) de forme correspondante réalisées dans la branche supérieure, et la barre de poussée inférieure s'applique contre chaque seconde branche inférieure des petites lamelles correspondantes dont la branche supérieure est écartée de la barre de poussée supérieure par les cavités (59), et la barre de poussée inférieure est écartée des branches inférieures des petites lamelles intermédiaires par la cavité (59) de forme correspondante réalisée dans la branche inférieure.

15. Dispositif selon l'une quelconque des revendications 1 à 14,
**caractérisé en ce que**
la pièce de guidage (2) pour le réglage en hauteur de la colonne de direction est montée basculante sur la pièce de console (1) autour d'un axe (78) horizontal, perpendiculaire à la broche de guidage (5), par rapport à la pièce de console (1).

16. Dispositif selon l'une quelconque des revendications 1 à 15,
**caractérisé en ce que**
la première installation de blocage agit entre la pièce de console (1) et la pièce de guidage (2) et la seconde installation de blocage agit entre la pièce de guidage (2) et le tube enveloppe (3).

17. Dispositif selon l'une quelconque des revendications 1 à 16,
**caractérisé en ce que**
pour le montage du boulon de serrage (7) dans la pièce de guidage (2), un prolongement tubulaire (22) relié rigidement à la pièce de guidage (2) s'étend dans la cavité centrale (20) des petites lamelles (17) ou dans l'ouverture centrale (72) du prolongement (47) du premier mors (13).

18. Dispositif selon l'une quelconque des revendications 1 à 15,
**caractérisé par**
un boulon de serrage (7) traversant la colonne de direction,
la première installation de blocage étant prévue entre la partie de la pièce de guidage (2) formée par le mors (13) et/ou le mors de serrage supérieur (62) et la pièce de console (1) et la seconde installation de blocage est prévue entre la pièce de console (1) et le tube enveloppe (3).

19. Dispositif selon l'une quelconque des revendications 1 à 18,
**caractérisé en ce que**
la seconde installation de blocage est également réalisée comme liaison à friction pour le réglage en longueur.

20. Dispositif selon la revendication 19,
**caractérisé en ce que**
la seconde installation de blocage comprend un paquet de lamelles (31) comprenant des grandes et des petites lamelles (32, 33) qui alternent dans le paquet de lamelles et sont traversées par un boulon de serrage (7), et dont les grandes lamelles (32) ont leur écartement réciproque variable dans ou sur le tube enveloppe (3) mais sont bloquées en coulissement dans la direction axiale de la broche de direction (5) et comportent une cavité intérieure (38, 39) permettant le coulissement du tube enveloppe (3) dans la direction axiale de la broche de direction (5) lorsque la seconde installation de blocage est ouverte, et dont les petites lamelles peuvent coulisser dans la direction axiale du boulon de serrage (7) mais sont bloquées en coulissement par rapport au boulon de serrage (7) dans la direction axiale de la broche de guidage (5) et coulissent par rapport aux grandes lamelles (32) pour le coulissement axial du tube enveloppe (3),
le paquet de lamelles (31) étant installé entre le premier et le second mors (35, 68) entre lesquels est serré le paquet de lamelles lorsque la seconde installation de blocage est en position de fermeture et entre lesquels se trouvent les éléments de ressort de préférence sous la forme de ressorts de compression (41) qui écartent les mors (35, 68) lorsque la seconde installation de blocage est en position ouverte.

21. Dispositif selon la revendication 20
**caractérisé en ce que**
le second mors (68) est formé par la paroi intérieure du tube enveloppe (3) dans la zone entourant le trou oblong (38).

22. Dispositif selon l'une quelconque des revendications 20 ou 21,
**caractérisé en ce que**
le second mors (35) est monté à l'extrémité libre du boulon de serrage (7),
la tête (36) du boulon de serrage saisissant par derrière un orifice de passage du second mors (35), et le second mors (35) guide le tube enveloppe (3) en le soutenant.

23. Dispositif selon l'une quelconque des revendications 20 à 22,
**caractérisé en ce que**
le second mors (35) comporte un prolongement de forme (37) recevant les petites lamelles (33) en coulissement dans la direction axiale du boulon de serrage (7).

24. Dispositif selon la revendication 23,
**caractérisé en ce que**
les ressorts de compression sont logés dans des perçages borgnes du prolongement de forme (37) du second mors (35).

25. Dispositif selon l'une quelconque des revendications 20 à 24,
**caractérisé en ce que**
les grandes et petites lamelles (32, 33) ont des bandes marginales supérieures et inférieures (45, 46) recourbées vers la broche de direction (5), la surface supérieure du premier et du second mors (68, 35) tournée vers les lamelles ayant des parties recourbées correspondant à la forme des mors.

26. Dispositif selon la revendication 20,
**caractérisé en ce que**
les ressorts de compression sont installés entre une cuvette à ressort d'écartement (69) et un pot à ressort d'écartement (66),
la cuvette à ressort d'écartement (69) ayant au niveau du trou oblong (38) du tube enveloppe (3), une déformation en forme de pot traversant le trou oblong.

27. Dispositif selon la revendication 26,
**caractérisé en ce que**
la cuvette à ressort d'écartement (69) et le pot à ressort d'écartement (66) sont logés dans des cavités des lamelles de guidage (74) et sont entraînés par celles-ci vis-à-vis de la pièce de console (1) lorsque le tube enveloppe (3) est déplacé.

28. Dispositif selon l'une quelconque des revendications 1 à 27,
**caractérisé en ce que**
la seconde installation de blocage est formée par deux plaques de pression qui peuvent être serrées l'une par rapport à l'autre par des boulons de serrage, l'une des plaques de pression étant formée de préférence par la paroi intérieure du tube enveloppe dans la zone entourant le trou oblong.
